# EUROPEAN PATENT APPLICATION

(11) **EP 4 823 158 A1**
(43) Date of publication of application: **14.10.2026**
(21) Application number: 24899932.8
(22) Date of filing: 05.12.2024
(51) Int. Cl.: H04W 24/08

(54) **COMMUNICATION METHOD AND COMMUNICATION APPARATUS**

(30) Priority: 07.12.2023 CN 202311683910
(71) Applicant: Huawei Technologies Co., Ltd., Shenzhen, Guangdong 518129 (CN)
(72) Inventor: CHEN, Shujing, Shenzhen, Guangdong 518129 (CN); QIN, Qibo, Shenzhen, Guangdong 518129 (CN); LI, Yiwen, Shenzhen, Guangdong 518129 (CN); YE, Chencheng, Shenzhen, Guangdong 518129 (CN)
(74) Representative: Huawei European IPR
(86) International application number: PCT/CN2024/137252
(87) International publication number: WO 2025/119298

(57) **Abstract**

This application provides a communication method and a communication apparatus. In the method, a first basis or a channel covariance matrix used to determine the first basis is provided. The first basis, as a region-level channel basis provided by a channel map, or the channel covariance matrix, as a region-level channel covariance matrix provided by the channel map, may be sent to a terminal as prior information, which helps reduce reference signal overheads. In addition, after performing channel measurement based on a reference signal, the terminal may feed back only a position index of the first basis, and does not need to feed back information such as an index of one or more basis vectors forming the first basis and a long-periodicity coefficient, which helps reduce feedback overheads.

## Description

This application claims priority to Chinese Patent Application No. 202311683910.X, filed with the China National Intellectual Property Administration on December 7, 2023 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

Currently, a reference signal-based channel reconstruction scheme has problems of high reference signal resource overheads and high long-periodicity basis feedback overheads. For example, a 3rd generation partnership project (3rd generation partnership project, 3GPP) release 16 (release 16, R16) codebook uses only a sparse characteristic of a channel in angle-delay domain, and a spatial domain basis, a frequency domain basis, and a combination coefficient need to be reported, resulting in high feedback overheads. For another example, a 3GPP release 18 (release 18, R18) codebook further considers a sparse characteristic of a channel, and considers a rule that different channel characteristics change at different speeds over time, and designs a codebook feedback manner combining long and short periodicities, to reduce feedback overheads. However, as the quantity of antennas increases, overheads for configuring reference signals and feedback overheads sharply increase.

### SUMMARY

This application provides a communication method and a communication apparatus. In the method, a first basis may be delivered to a first apparatus as prior information, which helps reduce reference signal overheads. In addition, the first apparatus feeds back only a position index in the first basis and a short-periodicity superposition coefficient, which helps reduce feedback overheads.

According to a first aspect, this application provides a communication method. The method is performed by a first apparatus. For example, the first apparatus may be a terminal, or may be a component (for example, a processor, a chip, or a chip system) of the terminal, or may be a logical module that can implement all or a part of functions of the terminal. The first apparatus receives indication information of a first basis, where the indication information of the first basis indicates a projection coefficient of the first basis on a quantization basis of the first basis and a column index of the quantization basis of the first basis. After receiving the indication information of the first basis, the first apparatus may determine and record the first basis. The first apparatus receives a first reference signal, and determines a first channel matrix based on the first reference signal. Further, the first apparatus may determine a first superposition coefficient vector based on the first channel matrix and a second basis constructed in a row that is in the first basis and that corresponds to a position index of the first reference signal in spatial-frequency domain. For example, it is assumed that a dimension of the first channel matrix is MN₁*1, a dimension of the second basis is MN₁*L, M is a quantity of antenna ports for receiving the first reference signal, N₁ is a quantity of frequency domain units for carrying the first reference signal, the first superposition coefficient vector includes L superposition coefficients, a dimension of the first superposition coefficient vector is L*1, M and N₁ are positive integers, and L is less than or equal to MN₁. The first apparatus may select, from the first superposition coefficient vector, K superposition coefficient vectors with largest amplitudes to form a second superposition coefficient vector, and determine position indexes of the K superposition coefficient vectors in the first superposition coefficient vector to form a second basis selection vector. Further, the first apparatus may send the second superposition coefficient vector and the second basis selection vector.

In the method, the first apparatus may receive the indication information of the first basis and the first reference signal, and the first reference signal may be a sparse reference signal, which helps reduce reference signal overheads. In addition, the first apparatus may determine, based on the indication information of the first basis, the row that is in the first basis and that corresponds to the position index of the first reference signal in spatial-frequency domain, so that the first apparatus can compute and report a short-periodicity coefficient (for example, the second superposition coefficient vector) based on a channel estimation result of the sparse reference signal. This helps reduce feedback overheads.

This application further provides a communication method. A difference between the communication method and the foregoing communication method lies in that indication information of a first basis indicates a projection coefficient of a channel covariance matrix on a quantization basis and an index corresponding to the projection coefficient on the quantization basis. In this way, the first apparatus can determine the channel covariance matrix based on the projection coefficient of the channel covariance matrix and the index that are indicated; perform singular value decomposition or eigen decomposition on the channel covariance matrix to obtain the first basis corresponding to the channel covariance matrix, and then perform subsequent operations in the foregoing communication method, for example, receive a first reference signal, and determine a first channel matrix based on the first reference signal; determine a first superposition coefficient vector based on the first channel matrix and a second basis constructed in a row that is in the first basis and that corresponds to a position index of the first reference signal in spatial-frequency domain; and send a second superposition coefficient vector and a second basis selection vector, where the second superposition coefficient vector includes K superposition coefficients, the second basis selection vector includes position indexes of the K superposition coefficients in the first superposition coefficient vector, and K is a positive integer less than or equal to L.

In the method, the first reference signal in the first apparatus is still a sparse reference signal, which helps reduce reference signal overheads. In addition, the first apparatus can compute and report the second superposition coefficient vector based on the first basis and a channel estimation result of the sparse reference signal, which helps reduce feedback overheads.

Optionally, the indication information of the first basis may indicate first *L*_{delay} projection coefficients with largest values or quantized values in diagonal elements of a projection coefficient matrix of the channel covariance matrix on the quantization basis, and indexes corresponding to the first *L*_{delay} projection coefficients on the quantization basis. Because the diagonal element of the projection coefficient matrix is a real number, indicating the diagonal element can reduce indication overheads. In a possible implementation, the first apparatus multiplies the second superposition coefficient vector by a third basis to obtain a second channel matrix, where the third basis is formed by columns that are in the first basis and that correspond to the K position indexes in the second basis selection vector.

In the method, the first apparatus may determine a projection of the channel matrix based on the columns that are in the first basis and that correspond to the K position indexes, and the channel matrix may be restored based on the projection of the channel matrix and the short-periodicity coefficient, which helps reduce computational overheads.

In a possible implementation, the first apparatus performs channel estimation based on a second reference signal to obtain a third channel matrix, where the second reference signal is a reference signal received before the first reference signal, and the second reference signal and the first reference signal are reference signals of a same type. The first apparatus determines a fourth basis based on the third channel matrix, determines that a common subspace in which the fourth basis intersects with the first basis is a first common subspace, and determines that a subspace, in the fourth basis, other than the first common subspace is a first non-common subspace. The first apparatus sends indication information of the first non-common subspace, where the indication information of the first non-common subspace indicates a projection coefficient of the first non-common subspace on a quantization basis of the first non-common subspace and a column index of the quantization basis of the first non-common subspace, the first non-common subspace is formed by L₁ columns of basis vectors, and L₁ is a positive integer.

In the method, the first apparatus may further perform channel estimation on the second reference signal (also referred to as a historical reference signal), to obtain the third channel matrix (also referred to as a historical channel matrix), so that the first apparatus can determine a projection of the historical channel matrix. Further, the first apparatus may determine the first non-common subspace, that is, the first non-common subspace is a non-common subspace between the projection of the historical channel matrix and a projection of a current channel matrix, and represents a difference between the projection of the historical channel matrix and the projection of the current channel matrix, thereby helping update the first basis based on the difference, and improve accuracy of channel estimation.

In a possible implementation, the first apparatus receives first indication information, where the first indication information indicates a frequency domain position for sending a third reference signal. The first apparatus sends the third reference signal based on the first indication information.

In the method, the first apparatus may further receive the first indication information of the third reference signal (for example, an uplink reference signal), to send the third reference signal based on an indication of the first indication information, so that a receive end of the third reference signal can perform channel estimation based on the third reference signal to restore channel state information.

According to a second aspect, this application provides a communication method. The method is performed by a second apparatus. For example, the second apparatus may be a network device (for example, a base station), or may be performed by a component (for example, a processor, a chip, or a chip system) of the network device, or may be a logical module that can implement all or a part of functions of the network device. The second apparatus sends indication information of a first basis, where the indication information of the first basis indicates a projection coefficient of the first basis on a quantization basis of the first basis and a column index of the quantization basis of the first basis. The second apparatus sends a first reference signal, so that a receive end of the first reference signal can perform channel estimation based on the first reference signal to obtain a first channel matrix, and the receive end of the first reference signal can determine a first superposition coefficient vector based on the first channel matrix and a second basis constructed in a row that is in the first basis and that corresponds to a position index of the first reference signal in spatial-frequency domain, to determine to select, from the first superposition coefficient vector, K superposition coefficient vectors with largest amplitudes to form a second superposition coefficient vector, and to determine position indexes of the K superposition coefficient vectors in the first superposition coefficient vector to form a second basis selection vector. The second apparatus receives the second superposition coefficient vector and the second basis selection vector.

In the method, the second apparatus may determine the first basis, and send the indication information of the first basis and the first reference signal, and the first reference signal may be a sparse reference signal, which helps reduce reference signal overheads. In addition, a data amount of the second superposition coefficient vector and the second basis selection vector received by the second apparatus is small, which indicates low feedback overheads. Further, the second apparatus may restore channel state information based on the two types of feedback and the first basis.

In another embodiment, this application further provides a communication method. A difference between the communication method and the foregoing communication method lies in that indication information of a first basis indicates a projection coefficient of a channel covariance matrix on a quantization basis and an index corresponding to the projection coefficient on the quantization basis, so that a first apparatus can first restore the channel covariance matrix based on the projection coefficient of the channel covariance matrix and the index that are indicated, and then perform singular value decomposition or eigen decomposition on the channel covariance matrix to obtain the first basis corresponding to the channel covariance matrix. Further, the second apparatus sends a first reference signal, and may correspondingly receive a second superposition coefficient vector and a second basis selection vector; and the second apparatus may restore channel state information based on the received second superposition coefficient vector and second basis selection vector.

In the method, the second apparatus sends the indication information of the first basis and the first reference signal, and the first reference signal may be a sparse reference signal, which helps reduce reference signal overheads. In addition, a data amount of the second superposition coefficient vector and the second basis selection vector received by the second apparatus is small, which indicates low feedback overheads.

Optionally, the indication information of the first basis may indicate first *L*_{delay} projection coefficients with largest values or quantized values in diagonal elements of a projection coefficient matrix of the channel covariance matrix on the quantization basis, and indexes corresponding to the first *L*_{delay} projection coefficients on the quantization basis. Because the diagonal element of the projection coefficient matrix is a real number, indicating the diagonal element can reduce indication overheads.

In a possible implementation, the second apparatus multiplies the second superposition coefficient vector by a third basis to obtain a second channel matrix, where the third basis is formed by columns that are in the first basis and that correspond to the K position indexes in the second basis selection vector.

In the method, the second apparatus may determine a projection of the channel matrix based on the columns that are in the first basis and that correspond to the K position indexes, and the channel matrix may be restored based on the projection of the channel matrix and a short-periodicity coefficient, which helps reduce computational overheads.

In a possible implementation, the second apparatus receives indication information of a first non-common subspace, where the indication information of the first non-common subspace indicates a projection coefficient of the first non-common subspace on a quantization basis of the first non-common subspace and a column index of the quantization basis of the first non-common subspace. The second apparatus performs Schmidt orthogonalization processing on the first basis and the first non-common subspace to obtain a fifth basis, and sends indication information of the fifth basis. The indication information of the fifth basis indicates the fifth basis, or indicates a projection coefficient of the fifth basis on a quantization basis of the fifth basis and a column index of the quantization basis of the fifth basis.

In this method, after the first apparatus determines a non-common subspace between a projection of a historical channel matrix and a projection of a current channel matrix, the first apparatus may indicate the non-common subspace (that is, the first non-common subspace) to the second apparatus. A specific indication manner includes indicating only the projection coefficient of the first non-common subspace and the column index of the quantization basis, which helps reduce feedback overheads. In addition, after determining the first non-common subspace, the second apparatus may further update the first basis based on the first non-common subspace to obtain the fifth basis, and subsequently, the fifth basis may be used to quantize the channel matrix, which helps improve accuracy of channel state information restoration. Optionally, the second apparatus may further send the indication information of the fifth basis to a core network device, so that the core network device updates basis information and updates a channel map.

In a possible implementation, the second apparatus sends first indication information, where the first indication information indicates a frequency domain position for sending a third reference signal. The second apparatus receives the third reference signal.

In the method, the second apparatus may further send the first indication information, to indicate the first apparatus to send the third reference signal, so that the channel state information can be restored based on the third reference signal.

In a possible implementation, the second apparatus determines a fourth channel matrix based on the third reference signal, and determines a third superposition coefficient vector based on the fourth channel matrix and a sixth basis constructed in a row that is in the first basis and that corresponds to a position index of the third reference signal in spatial-frequency domain. The second apparatus determines F superposition coefficients with largest amplitudes in the third superposition coefficient vector to form a fourth superposition coefficient vector, and determines position indexes of the F superposition coefficients in the third superposition coefficient vector to form a fourth basis selection vector. The second apparatus multiplies the fourth superposition coefficient vector by a seventh basis to obtain a fifth channel matrix, where the seventh basis is formed by columns that are in the fifth basis and that correspond to K position indexes in the fourth basis selection vector.

In the method, the second apparatus may perform channel estimation and channel state information restoration based on an uplink reference signal (for example, an SRS).

In a possible implementation, the second apparatus sends a first request message to the core network device, where the first request message requests to obtain the channel map, or requests to obtain the basis information corresponding to the first apparatus in the channel map. The second apparatus receives a first response message, where the first response message includes the channel map, or the basis information corresponding to the first apparatus in the channel map. In the method, the second apparatus may request the core network device to obtain the channel map, to obtain the basis information (for example, the first basis) based on the channel map, and may deliver the basis information to the first apparatus as prior information, which helps reduce reference signal overheads.

In a possible implementation, the second apparatus sends a first request message to the core network device, where the first request message requests to obtain the channel map, or requests to obtain a channel covariance matrix corresponding to the first apparatus in the channel map. The second apparatus receives a first response message, where the first response message includes the channel map, or the channel covariance matrix corresponding to the first apparatus in the channel map.

In the method, the second apparatus may request the core network device to obtain the channel map, to obtain, based on the channel map, the channel covariance matrix corresponding to the first apparatus, and may deliver the channel covariance matrix to the first apparatus as prior information, which helps reduce reference signal overheads.

In a possible implementation, the second apparatus performs channel estimation based on a fourth reference signal to obtain a plurality of sixth channel matrices, where the plurality of sixth channel matrices include channel state information in a spatial-frequency domain dimension, the fourth reference signal is a reference signal received before the third reference signal, and the fourth reference signal and the third reference signal are reference signals of a same type. The second apparatus determines an eighth basis based on the plurality of sixth channel matrices.

In a possible implementation, the second apparatus determines that a common subspace in which the eighth basis intersects with the first basis is a second common subspace, and determines that a subspace, in the eighth basis, other than the second common subspace is a second non-common subspace, where the second non-common subspace is used to update the fifth basis.

In the foregoing method, the second apparatus may generate the corresponding eighth basis based on information about a historical SRS signal, to obtain difference information (for example, the second non-common subspace) between the first basis and the information about the historical SRS signal, to update a channel basis, thereby helping improve channel state information reconstruction precision.

In a possible implementation, the second apparatus performs Schmidt orthogonalization processing on the fifth basis and the second non-common subspace to obtain a ninth basis. The second apparatus determines a fifth superposition coefficient vector based on the fourth channel matrix and a row that is in the ninth basis and that corresponds to a spatial-frequency position of the SRS signal, and determines a sixth superposition coefficient vector and a sixth basis selection vector based on the fifth superposition coefficient vector. The second apparatus multiplies the sixth superposition coefficient vector by a tenth basis to obtain the sixth channel matrix, thereby implementing channel state information reconstruction.

According to a third aspect, this application provides a communication method, and the method is implemented through interaction between a first apparatus and a second apparatus. For example, the first apparatus may be a terminal, and the second apparatus may be a network device. The communication method includes the following steps: The second apparatus sends indication information of a first basis, where the indication information of the first basis indicates a projection coefficient of the first basis on a quantization basis of the first basis and a column index of the quantization basis of the first basis; and correspondingly, the first apparatus receives the indication information of the first basis. The second apparatus sends a first reference signal. Correspondingly, the first apparatus receives the first reference signal, and determines a first channel matrix based on the first reference signal. Further, the first apparatus may determine a first superposition coefficient vector based on the first channel matrix and a second basis constructed in a row that is in the first basis and that corresponds to a position index of the first reference signal in spatial-frequency domain. The first apparatus selects, from the first superposition coefficient vector, K superposition coefficient vectors with largest amplitudes to form a second superposition coefficient vector, and determine position indexes of the K superposition coefficient vectors in the first superposition coefficient vector to form a second basis selection vector. The first apparatus may send the second superposition coefficient vector and the second basis selection vector. Correspondingly, the second apparatus receives the second superposition coefficient vector and the second basis selection vector.

In another communication method, the second apparatus sends indication information of a first basis, where the indication information of the first basis indicates a projection coefficient of a channel covariance matrix on a quantization basis and an index corresponding to the projection coefficient on the quantization basis, the projection coefficient of the channel covariance matrix and the index are used by a receive end to restore the channel covariance matrix and determine the first basis; and correspondingly, the first apparatus receives the indication information. The second apparatus sends a first reference signal. Correspondingly, the first apparatus receives the first reference signal, and determines a first channel matrix based on the first reference signal. Further, the first apparatus may determine a first superposition coefficient vector based on the first channel matrix and a second basis constructed in a row that is in the first basis and that corresponds to a position index of the first reference signal in spatial-frequency domain. The first apparatus selects, from the first superposition coefficient vector, K superposition coefficient vectors with largest amplitudes to form a second superposition coefficient vector, and determine position indexes of the K superposition coefficient vectors in the first superposition coefficient vector to form a second basis selection vector. The first apparatus may send the second superposition coefficient vector and the second basis selection vector. Correspondingly, the second apparatus receives the second superposition coefficient vector and the second basis selection vector.

In the method, the first apparatus may receive the indication information of the first basis and the first reference signal, and the first reference signal may be a sparse reference signal, which helps reduce reference signal overheads. In addition, the first apparatus may determine, based on the indication information of the first basis, the row that is in the first basis and that corresponds to the position index of the first reference signal in spatial-frequency domain, so that the first apparatus can compute and report a short-periodicity coefficient (for example, the second superposition coefficient vector) based on a channel estimation result of the sparse reference signal. This helps reduce feedback overheads. A data amount of the second superposition coefficient vector and the second basis selection vector received by the second apparatus is small, which indicates low feedback overheads. Further, the second apparatus may restore channel state information based on the two types of feedback and the first basis.

Optionally, for another implementation of the communication method, refer to the corresponding descriptions in the first aspect and the second aspect. Details are not described herein again.

According to a fourth aspect, this application provides a communication apparatus. The communication apparatus may be a terminal, or may be a component (for example, a processor, a chip, or a chip system) of the terminal, or may be an apparatus that can be used in conjunction with the terminal. In a possible implementation, the communication apparatus may include a functional module. The functional module may be implemented by a hardware circuit, software, or a combination of a hardware circuit and software.

In a possible implementation, the communication apparatus includes a communication unit and a processing unit. The communication unit is configured to receive indication information of a first basis, where the indication information of the first basis indicates a projection coefficient of the first basis on a quantization basis of the first basis and a column index of the quantization basis of the first basis. The processing unit is configured to determine and record the first basis. The communication unit is further configured to receive a first reference signal, and the processing unit is further configured to determine a first channel matrix based on the first reference signal. The processing unit is further configured to determine a first superposition coefficient vector based on the first channel matrix and a second basis constructed in a row that is in the first basis and that corresponds to a position index of the first reference signal in spatial-frequency domain. The processing unit is further configured to: select, from the first superposition coefficient vector, K superposition coefficient vectors with largest amplitudes to form a second superposition coefficient vector, and determine position indexes of the K superposition coefficient vectors in the first superposition coefficient vector to form a second basis selection vector. The communication unit is further configured to send the second superposition coefficient vector and the second basis selection vector.

In a possible implementation, the processing unit is configured to multiply the second superposition coefficient vector by a third basis to obtain a second channel matrix, where the third basis is formed by columns that are in the first basis and that correspond to the K position indexes in the second basis selection vector.

In a possible implementation, the processing unit is configured to perform channel estimation based on a second reference signal to obtain a third channel matrix, where the second reference signal is a reference signal received before the first reference signal, and the second reference signal and the first reference signal are reference signals of a same type. The processing unit is configured to: determine a fourth basis based on the third channel matrix, determine that a common subspace in which the fourth basis intersects with the first basis is a first common subspace, and determine that a subspace, in the fourth basis, other than the first common subspace is a first non-common subspace. The communication unit is configured to send indication information of the first non-common subspace, where the indication information of the first non-common subspace indicates a projection coefficient of the first non-common subspace on a quantization basis of the first non-common subspace and a column index of the quantization basis of the first non-common subspace, the first non-common subspace is formed by L₁ columns of basis vectors, and L₁ is a positive integer.

In a possible implementation, the communication unit is configured to receive first indication information, where the first indication information indicates a frequency domain position for sending a third reference signal. The processing unit is configured to send the third reference signal based on the first indication information by using the communication unit.

According to a fifth aspect, this application provides a communication apparatus. The communication apparatus may be a network device, or may be a component (for example, a processor, a chip, or a chip system) of the network device, or may be an apparatus that can be used in conjunction with the network device. In a possible implementation, the communication apparatus may include a functional module. The functional module may be implemented by a hardware circuit, software, or a combination of a hardware circuit and software.

In a possible implementation, the communication apparatus includes a communication unit and a processing unit. The communication unit is configured to send indication information of a first basis, where the indication information of the first basis indicates a projection coefficient of the first basis on a quantization basis of the first basis and a column index of the quantization basis of the first basis. The communication unit is further configured to send a first reference signal, so that a receive end of the first reference signal can perform channel estimation based on the first reference signal to obtain a first channel matrix, and the receive end of the first reference signal can determine a first superposition coefficient vector based on the first channel matrix and a second basis constructed in a row that is in the first basis and that corresponds to a position index of the first reference signal in spatial-frequency domain, to determine to select, from the first superposition coefficient vector, K superposition coefficient vectors with largest amplitudes to form a second superposition coefficient vector, and to determine position indexes of the K superposition coefficient vectors in the first superposition coefficient vector to form a second basis selection vector. The communication unit is further configured to receive the second superposition coefficient vector and the second basis selection vector.

In a possible implementation, the processing unit is configured to multiply the second superposition coefficient vector by a third basis to obtain a second channel matrix, where the third basis is formed by columns that are in the first basis and that correspond to the K position indexes in the second basis selection vector.

In a possible implementation, the communication unit is configured to receive indication information of a first non-common subspace, where the indication information of the first non-common subspace indicates a projection coefficient of the first non-common subspace on a quantization basis of the first non-common subspace and a column index of the quantization basis of the first non-common subspace. The processing unit is configured to perform Schmidt orthogonalization processing on the first basis and the first non-common subspace to obtain a fifth basis, and the communication unit is configured to send indication information of the fifth basis. The indication information of the fifth basis indicates the fifth basis, or indicates a projection coefficient of the fifth basis on a quantization basis of the fifth basis and a column index of the quantization basis of the fifth basis.

In a possible implementation, the communication unit is configured to send first indication information, where the first indication information indicates a frequency domain position for sending a third reference signal. The communication unit is further configured to receive the third reference signal.

In a possible implementation, the processing unit is configured to: determine a fourth channel matrix based on the third reference signal, and determine a third superposition coefficient vector based on the fourth channel matrix and a sixth basis constructed in a row that is in the first basis and that corresponds to a position index of the third reference signal in spatial-frequency domain. The processing unit is further configured to: determine F superposition coefficients with largest amplitudes in the third superposition coefficient vector to form a fourth superposition coefficient vector, and determine position indexes of the F superposition coefficients in the third superposition coefficient vector to form a fourth basis selection vector. The processing unit is further configured to multiply the fourth superposition coefficient vector by a seventh basis to obtain a fifth channel matrix, where the seventh basis is formed by columns that are in the fifth basis and that correspond to K position indexes in the fourth basis selection vector.

In a possible implementation, the communication unit is configured to send a first request message to a core network device, where the first request message requests to obtain a channel map, or requests to obtain basis information corresponding to a first apparatus in the channel map. The communication unit is further configured to receive a first response message, where the first response message includes the channel map, or the basis information corresponding to the first apparatus in the channel map.

In a possible implementation, the processing unit is configured to perform channel estimation based on a fourth reference signal to obtain a plurality of sixth channel matrices, where the plurality of sixth channel matrices include channel state information in a spatial domain dimension, the fourth reference signal is a reference signal received before the third reference signal, and the fourth reference signal and the third reference signal are reference signals of a same type. The processing unit is configured to determine an eighth basis based on the plurality of sixth channel matrices.

In a possible implementation, the processing unit is configured to: determine that a common subspace in which the eighth basis intersects with the first basis is a second common subspace, and determine that a subspace, in the eighth basis, other than the second common subspace is a second non-common subspace, where the second non-common subspace is used to update the fifth basis.

In a possible implementation, the processing unit is configured to perform Schmidt orthogonalization processing on the fifth basis and the second non-common subspace to obtain a ninth basis. The processing unit is configured to: determine a fifth superposition coefficient vector based on the fourth channel matrix and a row that is in the ninth basis and that corresponds to a spatial-frequency position of the SRS signal, and determine a sixth superposition coefficient vector and a sixth basis selection vector based on the fifth superposition coefficient vector. The processing unit is configured to multiply the sixth superposition coefficient vector by a tenth basis to obtain the sixth channel matrix, thereby implementing channel state information reconstruction.

For the fourth aspect and the fifth aspect, in an example, the processing unit may be a processor, and the communication unit may be a transceiver unit, a transceiver, or a communication interface. It may be understood that when the communication apparatus is a communication device (for example, a terminal or a network device), the communication unit may be a transceiver (for example, the transceiver includes a transmitter and a receiver) in the communication apparatus, for example, implemented by using an antenna, a feeder, and a codec in the communication apparatus. Alternatively, if the communication apparatus is a chip disposed in a device, the processing unit may be a processing circuit, a logic circuit, or the like of the chip, and the communication unit may be an input/output interface of the chip, for example, an input/output circuit or a pin.

According to a sixth aspect, this application provides a communication apparatus, including a processor, configured to execute instructions. Optionally, the communication apparatus further includes a memory. The memory is configured to store the instructions. When the instructions are executed by the processor, the communication apparatus is enabled to implement at least one of the following: the method according to any one of the first aspect and the possible implementations of the first aspect, and the method according to any one of the second aspect and the possible implementations of the second aspect. Optionally, the processor is coupled to the memory.

According to a seventh aspect, this application provides a communication system. The communication system includes at least one apparatus or device in the fourth aspect to the sixth aspect, so that the at least one apparatus or device performs at least one of the following: the method according to any one of the first aspect and the possible implementations of the first aspect, and the method according to any one of the second aspect and the possible implementations of the second aspect.

According to an eighth aspect, this application provides a computer-readable storage medium. The computer-readable storage medium stores instructions. When the instructions are run on a computer, the computer is enabled to perform at least one of the following: the method according to any one of the first aspect and the possible implementations of the first aspect, and the method according to any one of the second aspect and the possible implementations of the second aspect.

According to a ninth aspect, this application provides a computer program product, including instructions. When the instructions are run on a computer, the computer is enabled to perform at least one of the following: the method according to any one of the first aspect and the possible implementations of the first aspect, and the method according to any one of the second aspect and the possible implementations of the second aspect.

According to a tenth aspect, this application provides a chip, and the chip includes a processor (or a logic circuit). Optionally, the chip may further include a communication interface (or an interface), configured to implement at least one of the following: the method according to any one of the first aspect and the possible implementations of the first aspect, and the method according to any one of the second aspect and the possible implementations of the second aspect. In a possible implementation, if the chip is the smallest processing unit in an entire device, the chip may be a processor, or may include a processor and a memory, or may include a processor, a memory, and a transceiver, and is configured to implement at least one of the following: the method according to any one of the first aspect and the possible implementations of the first aspect, and the method according to any one of the second aspect and the possible implementations of the second aspect.

According to an eleventh aspect, this application provides a chip system. The chip system includes a processor and an interface. Optionally, the chip system may further include a memory, configured to implement at least one of the following: the method according to any one of the first aspect and the possible implementations of the first aspect, and the method according to any one of the second aspect and the possible implementations of the second aspect. The chip system may include a chip, or may include a chip and another discrete component.

### BRIEF DESCRIPTION OF DRAWINGS

FIG. 1 is a diagram of a communication system according to this application;
FIG. 2 is a diagram of a structure of a network element according to this application;
FIG. 3 is a diagram of a channel map;
FIG. 4 is a schematic flowchart of CSI measurement performed by a network device and a terminal;
FIG. 5 is a diagram of a structure of an R16 codebook;
FIG. 6 is a diagram of an equivalent representation of a channel matrix ***H*** by using a column vector;
FIG. 7 is a diagram of matrix decomposition of a spatial-frequency joint channel ***h***;
FIG. 8 is a schematic flowchart of spatial-frequency joint codebook feedback combining long and short periodicities;
FIG. 9 is a schematic flowchart of a communication method according to this application;
FIG. 10 is a diagram of a downlink channel reconstruction procedure enabled based on a channel map and a CSI-RS according to this application;
FIG. 11A and FIG. 11B are a diagram of a downlink channel reconstruction and channel basis update procedure enabled based on a channel map and a CSI-RS according to this application;
FIG. 12A and FIG. 12B are a diagram of a downlink channel reconstruction procedure enabled based on a channel map, a CSI-RS, and an SRS according to this application;
FIG. 13A and FIG. 13B are a diagram of a downlink channel reconstruction and channel basis update procedure enabled based on a channel map, a CSI-RS, and an SRS according to this application;
FIG. 14A and FIG. 14B are a diagram of a channel reconstruction and channel basis update procedure enabled based on a channel map and an SRS according to this application;
FIG. 15 is a diagram of a communication apparatus according to this application; and
FIG. 16 is a diagram of another communication apparatus according to this application.

### DESCRIPTION OF EMBODIMENTS

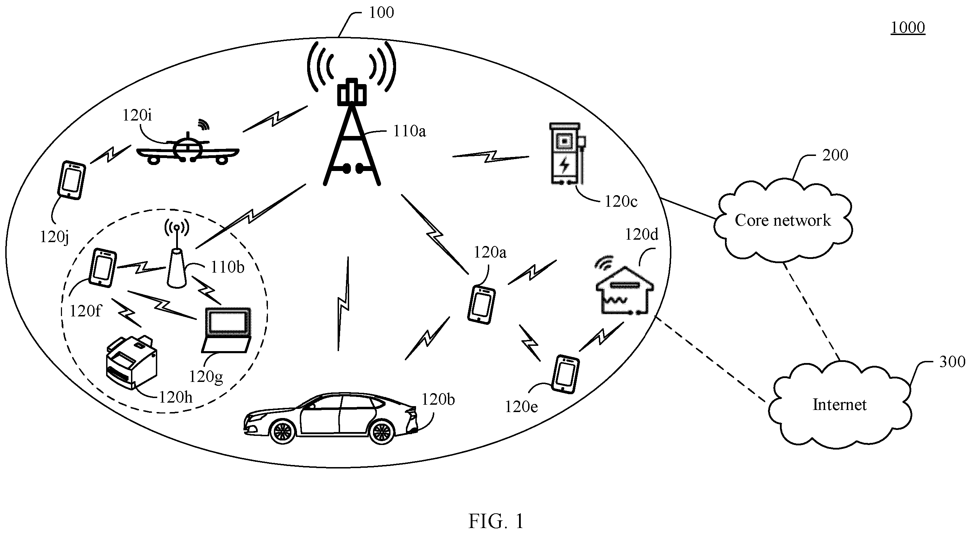

A communication method provided in this application may be applied to a communication system 1000 shown in FIG. 1. For example, the communication system includes a radio access network (radio access network, RAN) 100. The RAN 100 includes at least one RAN node (for example, 110a and 110b in FIG. 1, which are collectively referred to as 110), and may further include at least one terminal (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the RAN node 110 in a wireless manner. The terminals may be connected to each other in a wired or wireless manner and the RAN nodes may be connected to each other in a wired or wireless manner. The communication system 1000 may further include a core network 200. The RAN node 110 is connected to the core network 200 in a wireless or wired manner. A core network device in the core network 200 and the RAN node 110 in the RAN 100 may be different independent physical devices, or may be a same physical device that integrates a logical function of the core network device and a logical function of the RAN node. The communication system 1000 may further include an internet 300.

The RAN 100 may be an evolved universal terrestrial radio access (evolved universal terrestrial radio access, E-UTRA) system, a new radio (new radio, NR) system, or a future radio access system defined in 3GPP. The RAN 100 may further include the foregoing two or more different radio access systems. The RAN 100 may alternatively be an open RAN (open RAN, O-RAN).

The RAN node, also referred to as a radio access network device, a RAN entity, or an access node, is configured to help a terminal access a communication system in a wireless manner. In an application scenario, the RAN node may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation NodeB in a 6th generation (6th generation, 6G) mobile communication system, or a base station in a future mobile communication system. The RAN node may be a macro base station (for example, 110a in FIG. 1), may be a micro base station or an indoor base station (for example, 110b in FIG. 1), or may be a relay node or a donor node.

In another application scenario, a plurality of RAN nodes may cooperate to help a terminal implement radio access, and different RAN nodes separately implement a part of functions of a base station. For example, the RAN node may be a central unit (central unit, CU), a distributed unit (distributed unit, DU), a radio unit (radio unit, RU), or the like. The CU herein completes functions of a radio resource control protocol layer and a packet data convergence protocol (packet data convergence protocol, PDCP) layer of the base station, and may further complete functions of a service data adaptation protocol (service data adaptation protocol, SDAP) layer. The DU completes functions of a radio link control layer and a medium access control (medium access control, MAC) layer of the base station, and may further complete a part or all of functions of a physical layer. For specific descriptions of the foregoing protocol layers, refer to related technical specifications in 3GPP. The RU may be configured to implement a transceiver function of a radio frequency signal. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may be classified into two types of RAN nodes at a CU-control plane and a CU-user plane.

In different systems, the RAN node may have different names. For example, in an O-RAN system, the CU may be referred to as an open CU (open CU, O-CU), the DU may be referred to as an open DU (open DU, O-DU), and the RU may be referred to as an open RU (open RU, O-RU). The RAN node in embodiments of this application may be implemented by using a software module, a hardware module, or a combination of a software module and a hardware module. For example, the RAN node may be a server to which a corresponding software module is loaded. A specific technology and a specific device form that are used by the RAN node are not limited in embodiments of this application. For ease of description, the following uses a base station as an example of the RAN node for description.

The terminal is a device having a wireless transceiver function, and may send a signal to the base station, or receive a signal from the base station. The terminal may alternatively be referred to as a terminal device, user equipment (user equipment, UE), a mobile station, a mobile terminal, or the like. The terminal may be widely used in various scenarios, for example, a device-to-device (device-to-device, D2D) scenario, a vehicle-to-everything (vehicle-to-everything, V2X) communication scenario, a machine-type communication (machine-type communication, MTC) scenario, an internet of things (internet of things, IOT) scenario, a virtual reality scenario, an augmented reality scenario, an industrial control scenario, an autonomous driving scenario, a telemedicine scenario, a smart grid scenario, a smart furniture scenario, a smart office scenario, a smart wearable scenario, a smart transportation scenario, and a smart city scenario. The terminal may be a mobile phone, a tablet computer, a computer having a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be fixed or movable. The base station and the terminal may be deployed on land, including an indoor or outdoor device, a handheld device, or a vehicle-mounted device, may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 via 120i, the terminal 120i is a base station. However, for a base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, each of 110a and 110b in FIG. 1 may be referred to as a communication apparatus having a function of a base station, and each of 120a to 120j in FIG. 1 may be referred to as a communication apparatus having a function of a terminal.

Communication between the base station and the terminal, between the base stations, or between the terminals may be performed over a licensed spectrum, or may be performed over an unlicensed spectrum, or may be performed over both the licensed spectrum and the unlicensed spectrum. Communication may be performed over a spectrum below 6 gigahertz (gigahertz, GHz), or may be performed over a spectrum above 6 GHz, or may be performed over both the spectrum below 6 GHz and the spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as the smart grid, the industrial control, the smart transportation, and the smart city. The function of the terminal may be performed by a module (for example, a chip or a modem) in the terminal, or may be performed by an apparatus including the function of the terminal.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell that establishes the wireless connection to the terminal is referred to as a serving cell of the terminal. When communicating with the serving cell, the terminal is further interfered by a signal from a neighboring cell.

The core network may include but is not limited to one or more of the following devices or network elements: an access and mobility management function (access and mobility management function, AMF), a location management function (location management function, LMF), a map management function (map management function, MMF), and the like. The AMF is mainly responsible for mobility management in a mobile network, such as user location update, user network registration, and user switching. The LMF is responsible for obtaining a user location and other location information. The MMF is mainly responsible for storing channel characteristics based on the location information, generating a channel map, and the like.

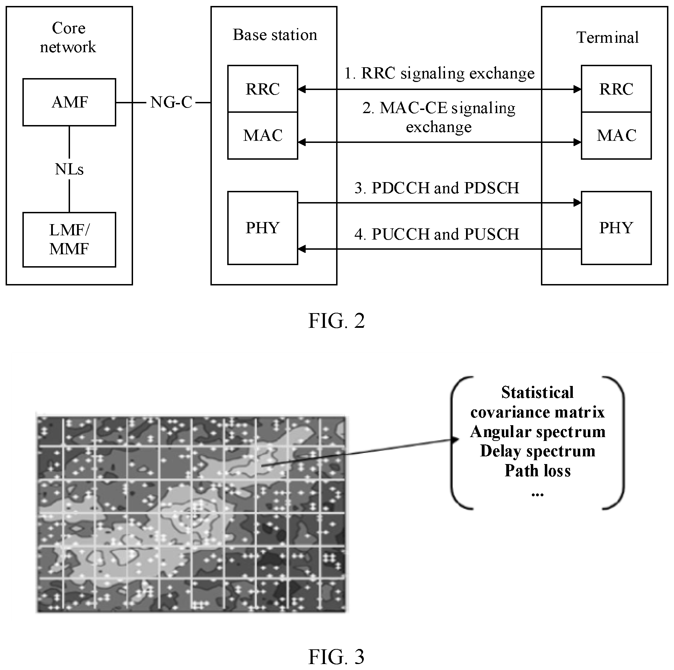

Optionally, a structure of a network element in this application is shown in FIG. 2, and mainly includes the following network elements and modules.
(1) A radio resource control (radio resource control, RRC) signaling exchange module is a module used by the base station and the terminal to send and receive RRC signaling.
(2) A MAC signaling exchange module is a module used by the base station and the terminal to send and receive medium access control-control element (MAC control element, MAC-CE) signaling.
(3) A physical layer (physical layer, PHY) signaling and data exchange module is a module used by the base station and the terminal to send and receive uplink/downlink control signaling (for example, a physical downlink control channel (physical downlink control channel, PDCCH) and a physical uplink control channel (physical uplink control channel, PUCCH)) and uplink/downlink data (for example, data transmitted on a physical downlink shared channel (physical downlink shared channel, PDSCH) and data transmitted on a physical uplink shared channel (physical uplink shared channel, PUSCH)).
(4) The base station communicates with the AMF through an NG-C interface. The AMF is equivalent to a router for communication between the base station and the LMF/MMF. The LMF implements UE location estimation. A map construction process is completed via the LMF/MMF. The AMF communicates with the LMF/MMF through an NLs interface.

It may be understood that, in this application, the PDSCH, the PDCCH, the PUSCH, and the PUCCH are merely used as examples of a downlink data channel, a downlink control channel, an uplink data channel, and an uplink control channel respectively. In different systems and different scenarios, the data channel and the control channel may have different names, and this is not limited in embodiments of this application.

It should be noted that:
In embodiments of this application, "sending" and "receiving" represent signal transfer directions. For example, "sending information to a terminal" may be understood as a destination of the information being the terminal device, and may include direct sending through an air interface, or indirect sending by another unit or module through an air interface. "Receiving information from a network device" may be understood as a source of the information being the network device, and may include direct receiving from the network device through an air interface, or indirect receiving from the network device from another unit or module through an air interface. The "sending" may be understood as "outputting" of a chip interface, and the "receiving" may be understood as "inputting" of chip interface.

In other words, sending and receiving may be performed between devices, for example, between a network device and a terminal device; or may be performed inside a device, for example, sending or receiving between components, modules, chips, software modules, or hardware modules inside the device through a bus, a cable, or an interface.

It may be understood that corresponding processing, such as encoding and modulation, may be performed on the information between the source end at which the information is sent and the destination end, but the destination end may understand valid information from the source end. Similar descriptions in this application may be understood similarly, and details are not described again.

In embodiments of this application, an "indication" may include a direct indication and an indirect indication, or may include an explicit indication and an implicit indication. Information indicated by a piece of information (for example, the following indication information) is referred to as to-be-indicated information. In a specific implementation process, the to-be-indicated information may be indicated in a plurality of manners, for example, but not limited to, directly indicating the to-be-indicated information, for example, indicating the to-be-indicated information an index of the to-be-indicated information. Alternatively, the to-be-indicated information may be indirectly indicated by indicating other information, where there is an association relationship between the other information and the to-be-indicated information. Alternatively, only a part of the to-be-indicated information may be indicated, and a remaining part of the to-be-indicated information is known or pre-agreed upon. For example, specific information may be indicated by an arrangement sequence of a plurality of pieces of information that is pre-agreed upon (for example, predefined in a protocol), to reduce indication overheads to some extent. A specific indication manner is not limited in this application. It may be understood that, for a sender of the indication information, the indication information may indicate to-be-indicated information, and for a receiver of the indication information, the indication information may be for determining the to-be-indicated information.

For ease of understanding, the following describes in detail definitions of related nouns in this application.

### 1. Channel map

The channel map may be understood as a database, configured to store channel characteristics based on location information. The channel characteristic includes but is not limited to a channel statistical covariance matrix, an angular spectrum, a delay spectrum, a path loss, and the like. For example, FIG. 3 is a diagram of a channel map. In the channel map, a physical cell is divided into two-dimensional grid points (for example, each grid in FIG. 3 is referred to as a grid point), and each grid point stores several channel characteristics (for example, a channel statistical covariance matrix, an angular spectrum, a delay spectrum, and a path loss) in a form of a matrix, a vector, or a scalar.

A common channel map construction method is to construct a database based on historical measurement data, and establish a mapping relationship between location information and a channel characteristic. However, there is a limitation on the historical measurement data. For example, the historical measurement data is usually based on a channel characteristic of a known location, and a channel characteristic of an unknown location is supplemented by using an interpolation method, to obtain the channel map of the entire cell. With development of a digital twin technology, the channel map may be obtained by using a channel twin technology. For example, a computer may combine a prior environment map (for example, including environment information obtained through measurement), and use electromagnetic simulation computation to simulate reflection, diffraction, and scattering characteristics of multipath communication, thereby obtaining a deterministic channel for channel map construction.

### 2. Channel map-assisted communication technology

An increase in system bandwidth, an increase in terminal antennas, heavier network load, a sharp increase in radio channel dimensions (for example, the radio channel dimension may be extended to a plurality of dimensions such as a spatial domain dimension, a spatial-frequency domain dimension, and a frequency domain dimension), and a limitation on pilot measurement resources pose a significant challenge to high-precision measurement of a radio channel. Accurate measurement of the radio channel is foundation of mobile communication network research, which is crucial for design, analysis and optimization of wireless communication networks. However, a conventional reference signal (for example, a pilot symbol)-based radio channel measurement method cannot meet requirements of technologies such as a large bandwidth and multi-antenna. To resolve the problem of limited reference signal measurement resources in a wireless communication system, channel measurement with low pilot overheads may be implemented by using the channel map. For example, a channel covariance matrix at a specific location is provided by using the channel map, and sounding reference signal (sounding reference signal, SRS) overheads are reduced with the assistance of the channel covariance matrix.

### 3. Downlink channel reconstruction technology

In a 5G communication system, using a large-scale multiple-input multiple-output (multiple input multiple output, MIMO) technology helps improve spectral efficiency of the system. When the MIMO technology is used, and a network device sends data to a terminal device, signal precoding needs to be performed based on channel state information (channel state information, CSI).

In a time division duplexing (time division duplexing, TDD) system, downlink CSI may be obtained based on channel reciprocity, for example, through downlink channel estimation by sending uplink SRS data. As the quantity of users increases and the load continues to grow, SRS carrier switching in large bandwidth scenarios may lead to insufficient SRS resources and severe channel aging.

In a frequency division duplexing (frequency division duplexing, FDD) system, because there is a large frequency spacing between an uplink channel and a downlink channel, the uplink channel and the downlink channel do not meet a direct reciprocity relationship, and uplink channel information cannot be used for accurate downlink precoding. In the FDD system, a user needs to feed back CSI of the downlink channel to a base station.

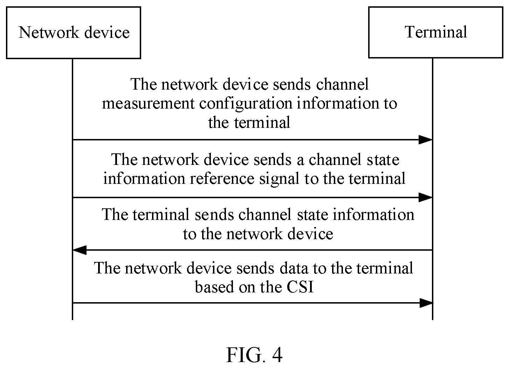

For example, FIG. 4 is a schematic flowchart of CSI measurement performed by a network device and a terminal, and the following steps may be included.

Step 1: The network device sends channel measurement configuration information to the terminal. The channel measurement configuration information is used for channel measurement configuration, for example, indicating channel measurement time to the terminal.

Step 2: The network device sends a channel state information reference signal (channel state information reference signal, CSI-RS) to the terminal, where the pilot is used for channel measurement. For example, the terminal receives the CSI-RS, and performs measurement based on the CSI-RS, to obtain CSI feedback information. Optionally, the CSI-RS may also be referred to as a CSI-RS pilot.

Step 3: The terminal sends channel state information to the network device. For example, the terminal sends channel state information such as a channel rank indicator (rank indicator, RI), a channel state indicator (channel quality indicator, CQI), and a precoding matrix indicator (precoding matrix indicator, PMI) to the network device.

Step 4: The network device sends data to the terminal based on the CSI. The network device determines, based on the CSI fed back by the terminal, precoding information and the like for sending service data, to transmit the service data.

Optionally, the channel state information (CSI) includes information that is reported by a receiving device to a sending device in a wireless communication system and that is used to describe a channel attribute of a communication link. The CSI may include, for example, but is not limited to, a precoding matrix indicator (PMI), a rank indicator (RI), a channel quality indicator (CQI), a CSI-RS resource indicator (CSI-RS resource indicator, CRI), and a layer indicator (layer indicator, LI). It should be understood that the foregoing listed specific content of the CSI is merely an example for description, and should not constitute any limitation on this application. The CSI may include one or more of the foregoing listed content, or may include other information that is different from the foregoing listed content and that represents CSI. This is not limited in this application.

### 4. An R16 codebook-based scheme for reference signal-based channel reconstruction

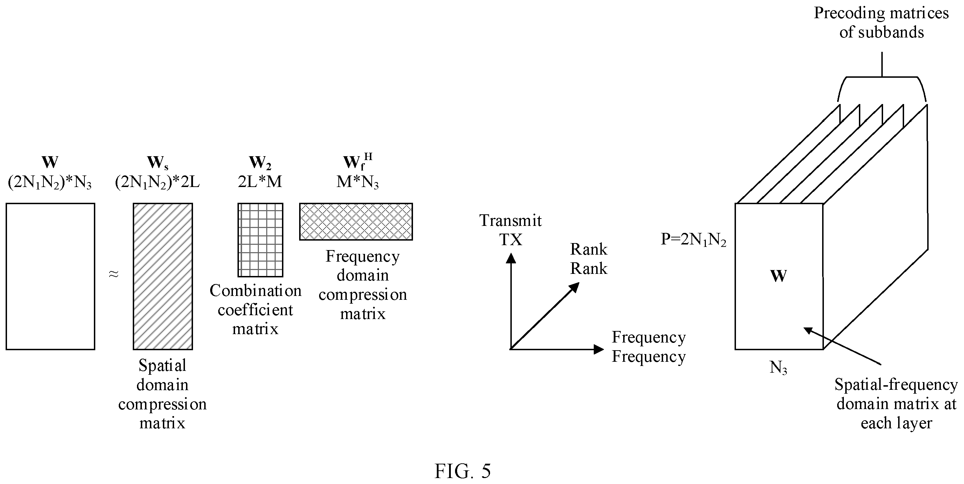

For example, the R16 codebook is a spatial-frequency dual-domain compressed codebook, channels of all subbands are compressed in frequency domain, and a structure of the codebook satisfies formula (1): $W = {W}_{s} {W}_{2} {W}_{f}^{H}$ (1) ${W}_{s} ∈ {ℂ}^{\left(2{N}_{1}{N}_{2}\right) \times 2 L}$ is a spatial domain compression matrix, ${W}_{2} ∈ {ℂ}^{2 L \times M}$ is a combination coefficient matrix, ${W}_{f} ∈ {ℂ}^{{N}_{3} \times M}$ is a frequency domain compression matrix, *N*₁, and *N*₂ are respectively a quantity of horizontal antenna ports (ports) and a quantity of vertical antenna ports of a base station, *L* is a quantity of spatial domain bases, and *M* is a quantity of frequency domain bases. For example, FIG. 5 is a diagram of a structure of the R16 codebook. The diagram shows each matrix and a dimension of the matrix. Optionally, spatial-frequency dual-domain compression means that quantization is performed by using sparseness of a channel in spatial domain and sparseness of the channel in frequency domain, and a quantity of weighting coefficients that need to be reported is reduced, thereby implementing channel matrix compression.

However, the R16 codebook uses only a sparse characteristic of a channel in angle-delay domain, that is, related characteristics of spatial domain information on different subbands are used for feedback and compression. For example, a spatial domain basis, a frequency domain basis, and a combination coefficient need to be fed back, resulting in high feedback overheads. In addition, because the bases need to be reported, it is specified in the protocol that both the spatial domain basis and the frequency domain basis are discrete Fourier transform (discrete Fourier transform, DFT) codebooks, which limits sparseness of the combination coefficient matrix ***W***₂. Besides, in an actual channel, especially in a scenario in which a channel propagation environment changes slowly, the basis changes slowly, and long-periodicity feedback may be performed. However, R16 does not support reporting of the basis and the combination coefficient in different periodicities.

### 5. An R18 codebook-based scheme for reference signal-based channel reconstruction

To perform a sparse representation on a channel in spatial-frequency domain, fully explore a sparse characteristic of the channel, and consider a rule that different channel characteristics change at different speeds over time, for example, characteristics that path angle-delay information (a spatial-frequency joint basis) changes slowly and a path superposition coefficient (a superposition coefficient corresponding to the basis) changes quickly, a codebook feedback manner combining long and short periodicities is designed for the R18 codebook-based scheme for reference signal-based channel reconstruction, which helps reduce feedback overheads. For example, the following separately describes two cases of spatial-frequency joint compression and feedback and spatial-frequency independent compression and feedback.

### Case 1: Spatial-frequency joint compression and feedback

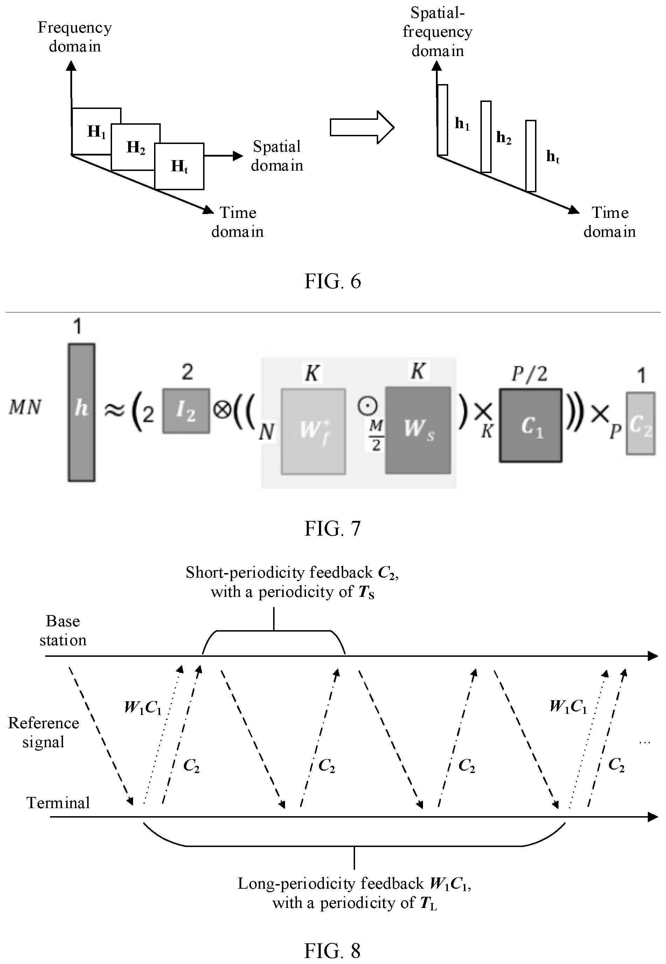

A downlink channel is used as an example. It is assumed that a terminal has a single antenna, and a matrix of the channel of the terminal satisfies formula (2): $H = S C {F}^{H} ∈ {ℂ}^{M \times N}$ (2) $S ∈ {ℂ}^{M \times L}$ is a spatial domain compression matrix, $F ∈ {ℂ}^{N \times L}$ is a frequency domain compression matrix, $C ∈ {ℂ}^{L \times L}$ is a combination coefficient matrix (which is a diagonal matrix), *M* is a quantity of base station antennas, L is a quantity of channel multipaths, and N is a quantity of frequency units (for example, the frequency unit is a subcarrier, a resource element (resource element, RE), a resource block (resource block, RB), a resource group (RB group, RBG), or a subband (subband). For example, FIG. 6 is a diagram of an equivalent representation of a channel matrix *H* by using a column vector. It can be learned that, spatial-frequency domain channels ***H***₁, ***H***₂, ..., and ***H**ₜ* represented by matrices shown in FIG. 6 may be equivalently represented by spatial-frequency domain column vectors ***h*₁**, ***h*₂,** ..., and ***hₜ***. An equivalent column vector satisfies formula (3): $h = \left(F*⊙S\right) c ∈ {ℂ}^{MN \times 1} , c = diag \left(C\right)$ (3)

*diag(C)* represents a column vector $\left(F*⊙S\right) ∈ {ℂ}^{2 MN \times L}$ formed by diagonal elements of the matrix C, ⊙ represents a Khatri-Rao product, for example, ***A***⊙***B*** = [***a*₁** ⊗ ***b*₁***_{...}**a**ₙ* ⊗ ***b**ₙ*], ***a**ₗ* is an *l*^{th} column of *A,* ⊗ is a Kronecker product (Kronecker product), ***b**ₗ* is an *l*^{th} column of *B,* and *l* is an integer greater than 0. The *l*^{th} (*i=*1, ..., and *N*) column of the matrix ***F****⊙***S*** may satisfy formula (4): $\left(F*⊙S\right) \left[:,l\right] = \left(F\left[:,l\right]\right) * ⊗ S \left[:,l\right] ∈ {ℂ}^{MN \times 1}$ (4)

⊗ represents a Kronecker (Kronecker) product, and [: , *l*] represents the *l*^{th} column of the matrix. In the foregoing operations, the spatial-frequency domain channel represented by a matrix may be represented by the spatial-frequency domain column vector.

A statistical covariance matrix of the channel **h** represented by the column vector satisfies formula (5): ${R}_{h} = E \left\{h{h}^{H}\right\} = U Λ {U}^{H}$ (5) ${R}_{h} ∈ {ℂ}^{2 MN \times 2 MN}$ and 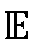 represent computation of an expectation for a random number/matrix, ***U*** is a matrix formed by eigenvectors of the covariance matrix ***R**ₕ*, an *i*^{th} column of ***U*** is an *i*^{th} eigenvector of ***R**ₕ*, a corresponding eigenvalue is an *i*^{th} element on a diagonal of the diagonal matrix **A,** eigenvalues corresponding to each column of U are elements on the diagonal of the diagonal matrix **A,** and the elements on the diagonal of **A** are arranged in descending order. An inter-polarization average covariance matrix satisfies formula (6): $\overline{{R}_{h}} = E \left\{\frac{{h}_{+} {h}_{+}^{H} + {h}_{-} {h}_{-}^{H}}{2}\right\} = \overline{U} \overline{Λ} {\overline{U}}^{H}$ (6)

***h**₊* is a channel corresponding to positive polarization, h_ is a channel corresponding to negative polarization, ***U̅*** is a matrix formed by eigenvectors of the average covariance matrix ${\overline{R}}_{h} ∈ {ℂ}^{MN \times MN}$, an *i*^{th} column of ***U̅*** is an *i*^{th} eigenvector of ***R̅ₕ***, a corresponding eigenvalue is an *i*^{th} element on a diagonal of the diagonal matrix ***Λ̅***, eigenvalues corresponding to each column of ***U̅*** are elements on the diagonal of the diagonal matrix Λ, and the elements on the diagonal of ***Λ̅*** are arranged in descending order. In this case, an instantaneous channel satisfies formula (7): $h = U \hat{h} \approx {U}_{p} {\hat{h}}_{p}$ (7)

***U**ₚ* is a matrix formed by first P columns of the basis **U.** The channel has a sparse characteristic (that is, only a part of elements in ***ĥ*** are non-zero or have larger values) in angle-delay domain, and the angle-delay changes slowly (that is, at different moments ***h***₁, ***h***₂ ··· , and ***h**ₜ*, *U* may be considered as basically unchanged or changing slowly, while ***ĥ***₁, ***ĥ***₂ ··· , and ***ĥ****ₜ* change over time). In addition, by using KL decomposition (Karhunen-Loeve decomposition), when h is extended based on eigenvectors corresponding to P largest eigenvalues of the matrix ***Rₕ*** (that is, the first P columns of *U: **U**ₚ*), a truncated statistical mean square error is minimized. It is considered that the statistical covariance matrix may be approximated by using a polarization-averaged statistical covariance matrix, the instantaneous channel h satisfies formula (8): $h = U \hat{h} \approx \left({I}_{2}⊗{\overline{U}}_{p}\right) {\hat{h}}_{p}$ (8)

***U̅**ₚ* is a matrix formed by first $\frac{P}{2}$ columns of ***U̅***, and ⊗ represents a Kronecker product. When a CSI feedback scheme is designed, quantization feedback may be performed on ***U̅**ₚ* in a long periodicity, and quantization feedback may be performed on ***ĥ****ₚ* in a short periodicity or an aperiodic manner.

For example, a specific CSI compression and reporting scheme includes the following steps.

S1: UE performs spatial-frequency joint covariance matrix statistics on a downlink channel, and performs inter-polarization average to obtain ***R̅ₕ***; and performs singular value decomposition (singular value decomposition, SVD) or eigen decomposition on ***R̅ₕ*** to obtain a matrix ***U̅*** formed by eigenvectors. The UE truncates the matrix ***U̅***, and selects $\frac{P}{2}$ columns corresponding to $\frac{P}{2}$ eigenvalues with largest energy to form the matrix ***U̅**ₚ*, and ***U̅**ₚ* includes an overwhelming majority of energy of the channel (selection of P may be determined by the UE, or the gNB specifies an optional range and then the UE performs selection).

S2: The UE approximates, based on the DFT codebook, the matrix ***U̅**ₚ* formed by the statistical eigenvectors, that is, searches for ***W_{f}***, ***Wₛ*,** and ***C***₁, so that ${\overline{U}}_{p} \approx \left({W}_{f}^{∗}⊗{W}_{s}\right) {C}_{1} = {W}_{1} {C}_{1}$ or ${\overline{U}}_{p} \approx \left({W}_{f}^{∗}⊙{W}_{s}\right) {C}_{1} = {W}_{1} {C}_{1}$*. **W**_{f}* and ***W**ₛ* are submatrices formed by some columns of an oversampled DFT matrix, and respectively represent beam/basis vectors in frequency domain and spatial domain; ***C***₁ is a projection of ***U̅**ₚ* on the quantization matrix ***W***₁, and ***W***₁ may be corrected to the statistical characteristic matrix ***U̅**ₚ*. In this step, ***W**_{f}, **W**ₛ*, and ***C*₁** obtained through computation are reported to the base station in long periodicities (optionally, the "long periodicity" is used to distinguish from a "short periodicity" in the following description, and does not necessarily mean that these matrices are reported in the same periodicity, because time change scales of the matrices may be different, for example, a rate at which ***C*₁** changes over time is likely to be faster than that of ***W**_{f}* and ***W**ₛ*, and different feedback periodicity granularities may be used).

S3: The UE computes, based on the instantaneous channel ***h*** and ***W*₁*C*₁** obtained in S2, a codebook ***C***₂ that needs to be fed back, where ***C***₂ may be a projection of the instantaneous channel h on ***W*₁*C*₁**, that is, ***C***₂ *=* (***W*₁*C*₁**)*^{H}**h***; or ***C***₂ may be obtained through computation in another form (for example, when columns of ***W*₁*C*₁** are not orthogonal, ***W*₁*C*₁** needs to be orthogonalized). The UE feeds back ***C*₂** to the base station in the short periodicity or an aperiodic manner for downlink channel reconstruction.

The foregoing CSI compression and reporting scheme is mapped to a codebook form, and formula (9) is satisfied: $W = \left({I}_{2}⊗\left(\left({W}_{f}^{∗}⊙{W}_{s}\right){C}_{1}\right)\right) {C}_{2}$ (9)

⊙ represents a KR (Khatri-Rao) product. For example, FIG. 7 is a diagram of matrix decomposition of a spatial-frequency joint channel **h.** In FIG. 7, ***h*** is a spatial-frequency joint channel, M is a quantity of base station antennas (dual-polarized arrays), and *N* is a quantity of frequency units (at a subcarrier granularity, an RB granularity, an RBG granularity, or a subband granularity). ***W**_{f}*, ***W**ₛ*, and ***C*₁** are used to approximate **U̅***ₚ* through quantization, and therefore, 2K ≥ P is satisfied, where K is a quantity of columns of the matrix ***W**ₛ.* ${W}_{f}^{∗} ⊙ {W}_{s}$ is a DFT basis for quantizing a spatial-frequency joint basis.

### Case 2: Spatial-frequency independent compression and feedback

A downlink channel is used as an example. It is assumed that a terminal has a single antenna, and a matrix of the channel of the terminal satisfies formula (10): ${H}^{\approx } S ′ {C}_{1} {C}_{2} {C}_{3} F {′}^{H}$ (10) $S ′ ∈ {ℂ}^{2 M \times B}$ is a spatial domain basis, and is a matrix formed by *B* spatial domain vectors; and $F ′ ∈ {ℂ}^{N \times F}$ is a frequency domain basis, and is a matrix formed by F frequency domain vectors. ${C}_{1} ∈ {ℂ}^{B \times {K}_{S}}$ is a first superposition coefficient matrix, representing a coefficient matrix formed by a plurality of groups of spatial domain vector coefficients; ${C}_{2} ∈ {ℂ}^{{K}_{S} \times D}$ is a second superposition coefficient matrix, representing a coefficient matrix formed by weighting coefficients corresponding to a group of spatial-frequency vectors formed by each of the B spatial domain vectors and each of the F frequency domain vectors; and ${C}_{3} ∈ {ℂ}^{D \times F}$ is a third superposition coefficient matrix, representing a matrix formed by a plurality of groups of frequency domain vector coefficients. B is the quantity of spatial domain vectors determined by the network device or the terminal; *K_{S}* represents a quantity of weighting coefficients corresponding to each spatial domain vector; *D* represents a quantity of weighting coefficients corresponding to each frequency domain vector; and *F* is the quantity of frequency domain vectors determined by the network device or the terminal.

Optionally, the spatial domain vector (spatial domain vector) may also be referred to as a beam vector, a spatial domain beam basis vector (spatial beam basis vector), or a spatial domain basis vector. A length of the spatial domain vector may be a quantity *M* of transmit antenna ports in a polarization direction, and *M* is a positive integer greater than 1. For example, if the spatial domain vector is a column vector or a row vector whose length is *M*, the *M* column vectors or row vectors respectively correspond to *M* transmit antenna ports. This is not limited in this application. Elements in the spatial domain vector may represent weights of antenna ports. Signals of the antenna ports are linearly superposed based on the weights of the antenna ports represented by the elements in the spatial domain vector, so that an area with strong signals can be formed spatially in a specific direction or some directions. Optionally, the spatial domain vector may be determined based on a DFT vector. In other words, the spatial domain vector may be a DFT vector. The spatial domain vector may be, for example, a DFT vector defined in a type II (type II) codebook in the 3GPP technical specification TS 38.214 release 15 (release 15, R15).

Optionally, the frequency domain vector (frequency domain vector) may also be referred to as a frequency domain basis vector, and is a vector representing a change rule of a channel in frequency domain. One frequency domain vector may represent one change rule. When a signal is transmitted on a radio channel, the signal may arrive at a receive antenna through a plurality of paths from a transmit antenna. Frequency selective fading caused by a multipath delay is a change of a frequency domain channel. Therefore, change rules, caused by delays on different transmission paths, of channels in frequency domain may be represented by different frequency domain vectors. A length of the frequency domain vector may be determined by a quantity of to-be-reported frequency domain units configured on the network side in a reporting bandwidth, or may be a value predefined in a protocol. The length of the frequency domain vector is not limited in this application. The reporting bandwidth may be, for example, indicated by a CSI reporting bandwidth (CSI-Reporting Band) carried in a CSI reporting configuration in higher layer signaling (for example, an RRC message). A length of the frequency domain vector may be denoted as *N*, where *N* is a positive integer greater than 1. The frequency domain vector may be, for example, a column vector or a row vector whose length includes *N*. This is not limited in this application.

Optionally, the spatial-frequency joint basis may represent common characteristics in spatial domain and frequency domain. For example, the spatial-frequency joint basis is a matrix constructed by one or more spatial-frequency domain basis vectors. The spatial-frequency domain basis vector may represent a change rule of a channel in frequency domain and signal characteristics in a direction or some directions in a space. For example, refer to the foregoing descriptions of characteristics of the spatial domain vector and the frequency domain vector. Details are not described herein again.

Corresponding to the channel decomposition manner shown in formula (10), mapping to the codebook form satisfies formula (11): $W = {W}_{S} {C}_{1} {C}_{2} {C}_{3} {W}_{f}^{H}$ (11) ${W}_{S} \times ∈ {ℂ}^{2 M \times B}$ is a spatial domain basis of the downlink channel determined by the network device or the terminal, and ${W}_{f} ∈ {ℂ}^{N \times F}$ is a frequency domain basis of the downlink channel determined by the network device or the terminal. A computation manner of ***W**_{S}* satisfies formula (12) and formula (13): ${R}_{S} = E \left\{H{H}^{H}\right\} = {U}_{S} {Λ}_{S} {U}_{S}^{H}$ (12) ${U}_{S} = {W}_{S} {C}_{1}$ (13) ${R}_{S} ∈ {ℂ}^{2 M \times 2 M}$ is a spatial domain statistical covariance matrix of ***H***, ${U}_{S} ∈ {ℂ}^{2 M \times {K}_{S}}$ is a matrix formed by eigenvectors of ***R**_{S}*, eigenvalues corresponding to each column of ***U**_{S}* are elements on a diagonal of the diagonal matrix ${Λ}_{S} ∈ {ℂ}^{{K}_{S} \times {K}_{S}}$ , the elements on the diagonal of ***Λ**_{S}* are arranged in descending order, and 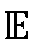 represents computation of an expectation for a random number/matrix. A computation manner of ***W**_{f}* satisfies formula (14) and formula (15): ${R}_{F} = E \left\{{H}^{H}H\right\} = {U}_{F} {Λ}_{F} {U}_{F}^{H}$ (14) ${U}_{F} = {W}_{f} {C}_{3}^{H}$ (15) ${R}_{F} ∈ {ℂ}^{N \times N}$ is a frequency domain statistical covariance matrix of ***H***, ${U}_{F} ∈ {ℂ}^{N \times D}$ is a matrix formed by eigenvectors of ***R**_{F}*, eigenvalues corresponding to each column of ***U**_{F}* are elements on a diagonal of the diagonal matrix ${Λ}_{F} ∈ {ℂ}^{D \times D}$, and the elements on the diagonal of ***Λ**_{F}* are arranged in descending order.

For example, FIG. 8 is a schematic flowchart of spatial-frequency joint codebook feedback combining long and short periodicities. For example, it is assumed that the configuration of the base station includes 64T dual-polarized antennas, 50 RBs, 64 DFT column vectors are used to approximate **U̅***ₚ*, **U̅***ₚ* has 13 columns, ${W}_{1} ∈ {ℂ}^{1600 \times 64} , {C}_{1} ∈ {ℂ}^{64 \times 13}$, long-periodicity feedback of ***W*₁*C*₁** is performed, with a periodicity of *T_{L}*, and short-periodicity feedback of ***C*₂** is performed, with a periodicity of *T_{S}.* Each time when the long-periodicity basis feedback is performed, when a feedback amount required for ***W*₁** is ignored, 64 × 13 = 832 coefficients forming ***C*₁** need to be fed back. It can be learned that, overheads of the spatial-frequency joint codebook feedback combining long and short periodicities are high. In addition, the base station further needs to configure 32-port CSI-RSs to measure channel information, and pilot overheads are high. As the quantity of antennas increases, frequency bands rise, and pilot overheads sharply increase.

Therefore, this application provides a communication method. In the method, a base station uses a region-level channel basis provided by a channel map as prior information (which may be a spatial-frequency joint basis U, or a spatial domain basis ***U_{S}*** and a frequency domain basis ***U**_{F}*, or may be a spatial domain compression matrix ***W**ₛ* and a frequency domain compression matrix ***W**_{f}*, which is not limited in this application), and then delivers the spatial-frequency joint basis *U* to UE in a long periodicity, and delivers a sparse CSI-RS in a short periodicity. After receiving the sparse CSI-RS, the UE computes a superposition coefficient ***C***₂ and performs feedback in a short periodicity, and updates and feeds back a column index value of the spatial-frequency joint basis, which helps reduce the feedback overhead.

To reduce reference signal overheads and reference signal feedback overheads, this application provides a communication method. In the method, sending channel basis information based on a channel map effectively reduces reference signal overheads and reference signal feedback overheads, thereby improving channel reconstruction precision.

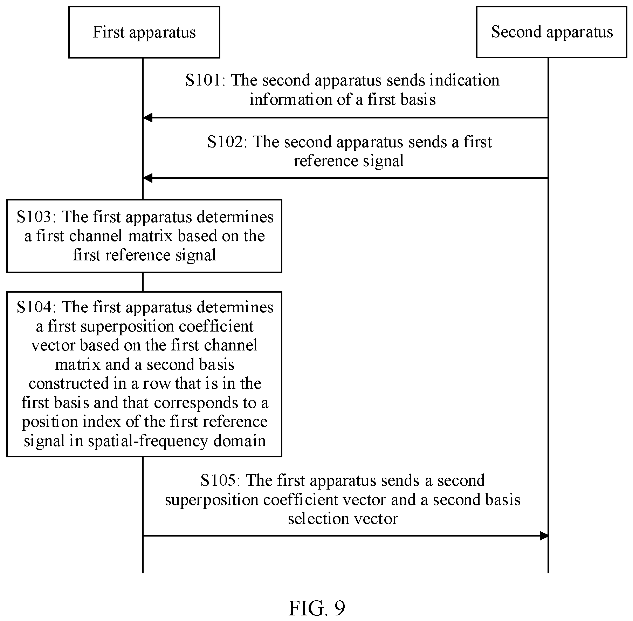

For example, FIG. 9 is a schematic flowchart of a communication method according to this application. The method may be implemented through interaction between a first apparatus and a second apparatus. In this application, the first apparatus may be a terminal or a module applied to a terminal, and the second apparatus may be a network device or a module applied to a network device. The method includes the following steps.

S101: The second apparatus sends indication information of a first basis. Correspondingly, the first apparatus receives the indication information of the first basis.

For example, according to the foregoing descriptions of R16 codebook-based and R18 codebook-based schemes for reference signal-based channel reconstruction, a matrix of a channel of the terminal may be equivalently represented by a column vector in spatial-frequency domain. The terminal determines the channel based on the CSI-RS, and a base station restores the channel based on a quantization basis and a coefficient that are fed back by the terminal. Therefore, in this embodiment, it is designed that the second apparatus may directly send the indication information of the first basis (indicating the first basis to the first apparatus) to the first apparatus, so that the first apparatus directly obtains basis information. In addition, different from the R16 codebook-based and R18 codebook-based schemes (a channel basis is computed on the terminal side and then quantized and fed back to the base station side, and therefore, the basis obtained through computation on the base station side has a precision loss), in this embodiment, the first basis is a region-level channel basis (prior information) provided by a channel map, and the second apparatus may obtain the channel basis without a quantization loss based on the channel map, which helps improve CSI reconstruction precision.

In an optional implementation, the indication information of the first basis indicates a projection coefficient of the first basis on a quantization basis of the first basis and a column index of the quantization basis of the first basis. The second apparatus may determine the first basis based on the projection coefficient of the first basis and the column index.

In another optional implementation, the indication information of the first basis indicates a projection coefficient of a channel covariance matrix on a quantization basis and an index corresponding to the projection coefficient on the quantization basis. The second apparatus may restore the channel covariance matrix based on the projection coefficient of the channel covariance matrix and the index, and further determine the first basis based on the channel covariance matrix.

The first basis is formed by L columns of basis vectors, and L is a positive integer. For example, the quantization basis of the first basis is any one of a DFT codebook, a fast Fourier transform (fast Fourier transform, FFT) codebook, an oversampled DFT codebook, an oversampled FFT codebook, or a codebook determined based on a preset rule. This is not limited in this application. The basis vector is determined based on the quantization basis. For example, the basis vector is any one of a DFT basis vector (the DFT basis vector is a vector determined based on the DFT codebook), an FFT basis vector (the FFT basis vector is a vector determined based on the FFT codebook), an oversampled DFT basis vector (the oversampled DFT basis vector is a vector determined based on the oversampled DFT codebook), an oversampled FFT basis vector (the oversampled FFT basis vector is a vector determined based on the oversampled FFT codebook), or a vector determined based on a preset rule. It is assumed that one or more basis vectors are one or more DFT basis vectors, the first basis is a matrix formed by L columns of DFT basis vectors selected from the one or more DFT basis vectors (that is, elements in the first basis satisfy the preset rule and have related characteristics).

The column index of the quantization basis of the first basis includes an index of the basis vector forming the first basis. For example, it is assumed that the first basis is obtained by performing quantization projection on the quantization basis of the first basis. For example, the quantization basis of the first basis may be a DFT codebook, and the first basis is obtained by performing quantization projection on the DFT codebook. However, a plurality of DFT basis vectors may be sequentially arranged in the DFT codebook. It is assumed that a 1^{st} DFT basis vector, a 3^{rd} DFT basis vector, and a 5^{th} DFT basis vector are selected to construct the first basis. In this case, column indexes of the quantization basis of the first basis are {1, 3, 5}.

Optionally, the first basis is a spatial-frequency joint basis, or a spatial domain basis and a frequency domain basis. For example, it is assumed that the first basis is a spatial-frequency joint basis ***U***, and the quantization basis of the first basis is the DFT codebook. In this case, the indication information of the first basis indicates a projection coefficient of the spatial-frequency joint basis ***U*** on the DFT codebook and a column index of the DFT codebook. It should be noted that the basis in this application may also be referred to as a codebook. For example, the first basis may also be referred to as a first codebook, a second basis may also be referred to as a second codebook, and the like. This is not limited in this application.

Optionally, a specific implementation of the indication information of the first basis includes the following cases.
(1) Case 1: The indication information of the first basis includes the first basis. That is, the second apparatus directly sends the first basis to the first apparatus. For example, it is assumed that the first basis is a spatial-frequency joint basis ***U***, the second apparatus sends, to the first apparatus through a PDCCH/PDSCH, the spatial-frequency joint basis $U ∈ {ℂ}^{MN \times L}$ corresponding to the first apparatus, where *M* is a quantity of antennas of the second apparatus, *L* is a quantity of paths, and *N* is a quantity of frequency units (for example, the frequency unit is a subcarrier, an RB, an RBG, or a subband). It should be noted that a value in the first basis may be a complex number, and amplitude and phase quantization processing needs to be performed on the complex number value. The second apparatus may obtain and send the first basis obtained through amplitude and phase quantization processing.
(2) Case 2: The indication information of the first basis includes a projection coefficient of the first basis on a quantization basis of the first basis and a column index of the quantization basis of the first basis. That is, the second apparatus indirectly indicates the first basis to the first apparatus. For example, it is assumed that the first basis is a spatial-frequency joint basis ***U***, the second apparatus may perform quantization processing on the spatial-frequency joint basis ***U*** by using the quantization basis ***B*** of the first basis constructed by one or more basis vectors. Quantization processing satisfies formula (16): $U = B \times {C}_{13}$ (16)

***B*** represents the quantization basis of the first basis, ***C***₁₃ represents the projection coefficient of the first basis on the quantization basis of the first basis, and a function of ***C***₁₃ is similar to that of the foregoing coefficient ***W*₁*C*₁.** Therefore, the indication information of the first basis includes the column index (indicating a basis vector used for quantizing the spatial-frequency joint basis ***U***) of the quantization basis of the first basis and ***C***₁₃. For another example, it is assumed that the first basis is a spatial domain basis ***U_{S}*** and a frequency domain basis ***U**_{F}*, refer to the descriptions of the spatial-frequency independent compression and feedback procedure described in the first part above. For example, the spatial domain basis ***U_{S}*** satisfies formula (13), and quantization processing is performed by using ***W**_{S}*; and the frequency domain basis ***U**_{F}* satisfies formula (15), and quantization processing is performed by using ***W**_{f}*.

Optionally, the second apparatus may send the projection coefficient of the first basis on the quantization basis of the first basis and the column index of the quantization basis of the first basis to the first apparatus through the PDCCH/PDSCH. Correspondingly, the first apparatus receives the projection coefficient of the first basis on the quantization basis of the first basis and the column index of the quantization basis of the first basis, so that the spatial-frequency joint basis ***U*** can be restored based on the quantization basis ***B*** of the first basis. Optionally, the quantization basis ***B*** of the first basis is known and the same for both the first apparatus and the second apparatus. Optionally, indication overheads in case 2 are lower than indication overheads in case 1, but the quantization basis ***B*** of the first basis needs to be preset (for example, pre-stored) on both the first apparatus side and the second apparatus side.

(3) Case 3: The indication information of the first basis includes a projection coefficient of a channel covariance matrix on a quantization basis and an index (or a position index) corresponding to the projection coefficient on the quantization basis. That is, the second apparatus indirectly indicates the first basis to the first apparatus. The first apparatus may determine the channel covariance matrix based on the projection coefficient of the channel covariance matrix and the index that are indicated; and perform singular value decomposition or eigen decomposition on the channel covariance matrix to obtain the first basis corresponding to the channel covariance matrix.

For example, using the frequency domain statistical covariance matrix ***R**_{F}* shown in formula (14) as an example, the first apparatus computes, by using formula (17) below, a projection coefficient matrix ***S***_{delay} obtained through a projection of ***R**_{F}* on a frequency domain compression matrix ***W**_{f}*: ${S}_{delay} = {W}_{f}^{H} {R}_{F} {W}_{f}$ (17)

The second apparatus may select, from the projection coefficient matrix ***S***_{delay}, K' projection coefficients with largest quantized values for delivery, and deliver row and column indexes corresponding to the K' projection coefficients in the frequency domain compression matrix ***W**_{f}*.

Optionally, for the projection coefficient matrix of the channel covariance matrix on the quantization basis, the second apparatus may deliver only a diagonal element of the projection coefficient matrix. Because the diagonal element is a real number (the coefficient is a real number), indication overheads can be reduced.

For example, the diagonal element of the projection coefficient matrix ***S***_{delay} is: ${S}_{delay}^{′} = diag \left\{{W}_{f}^{H}{R}_{F}{W}_{f}\right\}$ (18)

The diagonal element of ***S***_{delay} is a real number, and the projection coefficient is also a real number. The second apparatus may deliver first *L*_{delay} projection coefficients whose values or quantized values are the largest in ***S***_{delay} and indexes *id*_{d,part} corresponding to the first *L*_{delay} projection coefficients on the quantization basis. Because the row index and the column index of the diagonal element are equal, the index and/or the column index may be delivered.

Optionally, before S101, the method further includes the following steps.

The second apparatus sends a first request message to a core network device, where the first request message requests to obtain the channel map, thereby obtaining the basis information corresponding to the first apparatus. For example, the channel map is shown in FIG. 3. When the first apparatus moves to any grid in the channel map, the second apparatus may trigger the first request message to request to obtain the basis information corresponding to the first apparatus. The basis information is determined based on the channel map. For example, the second apparatus may determine, based on path angle-delay information of the channel map, that the spatial-frequency joint basis is the first basis. Optionally, if the core network device is, for example, an AMF, the second apparatus sends the first request message to the AMF. The AMF is equivalent to a router for communication between the second apparatus and the LMF/MMF, and the second apparatus requests, via the AMF, the LMF/MMF to obtain the channel map. Correspondingly, the LMF/MMF may send the channel map to the second apparatus via the AMF. Therefore, after obtaining the channel map, the second apparatus may determine the first basis based on the channel map.

S102: The second apparatus sends a first reference signal. Correspondingly, the first apparatus receives the first reference signal.

The first reference signal is used to measure channel information, and may be specifically a downlink reference signal. The downlink reference signal may include a CSI-RS, a synchronization signal/physical broadcast channel block (synchronization signal/physical broadcast channel block, SSB), a demodulation reference signal (demodulation reference signal, DMRS), or the like.

Optionally, density of the first reference signal is positively correlated with a quantity of columns of the first basis. Specifically, the density *ρ* of the first reference signal is in direct proportion to the quantity *L* of columns of the first basis, for example, a smaller value of *L* indicates a smaller value of *ρ*. It may be understood that, a smaller quantity *L* of columns of the first basis indicates a smaller quantity of channel multipaths, and therefore values for which channel measurement needs to be performed are fewer. Correspondingly, fewer reference signals need to be sent. Therefore, the density *ρ* of the first reference signal is in direct proportion to the quantity *L* of columns of the first basis. For example, it is assumed that the first basis is a spatial-frequency joint basis ***U***, and the spatial-frequency joint basis $U ∈ {ℂ}^{MN \times L}$ corresponding to the first apparatus is known, where *M* is a quantity of antennas of the second apparatus, *L* is a quantity of channel multipaths, and *N* is a quantity of frequency units. The second apparatus sets the density *ρ* of the first reference signal based on a quantity *L* of columns of the spatial-frequency joint basis ***U***, and may reduce a frequency domain granularity from *N* to *N*₁, thereby reducing reference signal overheads.

S103: The first apparatus determines a first channel matrix based on the first reference signal.

S104: The first apparatus determines a first superposition coefficient vector based on the first channel matrix and a second basis constructed in a row that is in the first basis and that corresponds to a position index of the first reference signal in spatial-frequency domain.

The first apparatus performs channel estimation based on the first reference signal, and may obtain that the first channel matrix is channel state information of the first reference signal in a corresponding spatial-frequency domain dimension. For example, it is assumed that the first reference signal is a CSI-RS signal. The first apparatus performs channel estimation on the CSI-RS signal, to obtain the first channel matrix ***h**ₛ* in the spatial-frequency domain dimension. A dimension of the first channel matrix is *MN*₁ × 1. For example, ***h**ₛ* satisfies ${h}_{s} ∈ {ℂ}^{{MN}_{1} \times 1}$, where *M* is a spatial domain granularity (for example, a quantity of antennas) of the first reference signal, and *N*₁ is a frequency domain granularity (for example, a quantity of subcarriers, a quantity of RBs, a quantity of RBGs, or a quantity of subbands) of the first reference signal.

The second basis constructed in the row that is in the first basis and that corresponds to the position index of the first reference signal in spatial-frequency domain is represented as ***U**ₛ*. A dimension of the second basis is *MN*₁ × *L*. For example, ***U**ₛ* satisfies ${U}_{s} ∈ {ℂ}^{{MN}_{1} \times L}$. For example, the first apparatus receives the first reference signal, and may determine position indexes of the first reference signal in spatial-frequency domain; and obtains, from the first basis based on the position indexes (*M* and *N*₁) of the first reference signal in spatial-frequency domain, a row corresponding to the position indexes, to form the second basis ***U**ₛ*.

The first superposition coefficient vector is determined based on the first channel matrix and the second basis constructed in the row that is in the first basis and that corresponds to the position index of the first reference signal in spatial-frequency domain, and satisfies formula (19): $c = pinv \left({U}_{s}\right) \times {h}_{s}$ (19)

***c*** is the first superposition coefficient vector, ***h**ₛ* is the first channel matrix, ***U**ₛ* is the second basis, and *pinv*(***A***) represents a pseudo-inverse of the matrix ***A***. Optionally, formula (19) is merely an example, and the first superposition coefficient vector may alternatively satisfy a variation based on formula (19), or satisfy another generation manner based on ***h**ₛ* and ***U**ₛ*. This is not limited in this application. The first superposition coefficient vector includes L superposition coefficients, a dimension of the first superposition coefficient vector is L*1, and L is a positive integer. For example, ***c*** satisfies $c ∈ {ℂ}^{L \times 1}$. Optionally, the superposition coefficient vector represents a projection coefficient of the channel matrix on the basis.

S105: The first apparatus sends a second superposition coefficient vector and a second basis selection vector. Correspondingly, the second apparatus receives the second superposition coefficient vector and the second basis selection vector.

The second superposition coefficient vector includes K superposition coefficients, and the K superposition coefficients are K elements with largest amplitudes in the first superposition coefficient vector. K is a positive integer less than or equal to L. For example, it is known that the first superposition coefficient vector includes L superposition coefficients. It is assumed that K elements with largest amplitudes in the L superposition coefficients form the second superposition coefficient vector ***c'***, where ***c'*** satisfies $c ′ ∈ {ℂ}^{K \times 1}$, and *K* satisfies 0 < *K* ≤ *L*. It may be understood that the K elements with the largest amplitudes in the L superposition coefficients satisfy that the *K* coefficients are greater than *L* - *K* superposition coefficients other than the *K* coefficients in the L superposition coefficients. For example, it is assumed that the L superposition coefficients are 1, 3, 4, 6, 2, and 5, and L=6; and it is assumed that K=3, and the K elements with the largest amplitudes among all elements in the L superposition coefficients include 4, 5, and 6, that is, the second superposition coefficient vector includes three elements, which are respectively 4, 5, and 6.

The second basis selection vector includes position indexes of the K superposition coefficients in the first superposition coefficient vector. For example, it is assumed that the L superposition coefficients are 1, 3, 4, 6, 2, and 5, and L=6; and it is assumed that K=3, and the second superposition coefficient vector includes three superposition coefficients, which are 4, 5, and 6 respectively. Position indexes of the three superposition coefficients in the first superposition coefficient vector are respectively 3, 6, and 4, that is, the second basis selection vector includes three elements, which are respectively 3, 4, and 6.

Optionally, that the first apparatus sends the second superposition coefficient vector and the second basis selection vector may be, for example, that the first apparatus sends the second superposition coefficient vector and the second basis selection vector to the second apparatus through a PUCCH/PUSCH. Optionally, the first apparatus may report the second superposition coefficient vector in a short periodicity, and the first apparatus may report the second basis selection vector in a short periodicity or a long periodicity. This is not limited in this application.

It can be learned that the first apparatus needs to feed back only the K superposition coefficients (similar to the short-periodicity superposition coefficients shown in FIG. 8) and the position indexes (indicating position indexes in the first basis) of the K superposition coefficients in the first superposition coefficient vector, which helps reduce feedback overheads. For example, because the second apparatus knows the channel map and the first basis, the first apparatus needs to feed back only the position indexes in the first basis, and does not need to feed back indexes of one or more basis vectors forming the first basis and a long-periodicity coefficient (the long-periodicity superposition coefficient shown in FIG. 8), thereby reducing feedback overheads.

In this embodiment, the first basis is a region-level channel basis provided by the channel map, and the second apparatus delivers the first basis to the first apparatus as prior information, which helps reduce reference signal overheads. In addition, the first apparatus feeds back only the position index in the first basis and the short-periodicity superposition coefficient, which helps reduce feedback overheads.

### 1. Channel basis update method provided in this application

The first apparatus may multiply the second superposition coefficient vector by a third basis to obtain a second channel matrix, that is, restore CSI information. Further, the first apparatus may determine, based on the restored CSI information and historical CSI information, a historical channel basis associated with the historical CSI information, and update a channel basis (for example, update the first basis) based on the historical channel basis.

For example, the channel basis update method provided in this application includes the following steps.
(1) The first apparatus multiplies the second superposition coefficient vector by a third basis to obtain a second channel matrix. The third basis is formed by columns that are in the first basis and that correspond to the K position indexes in the second basis selection vector. For example, the second channel matrix satisfies formula (20): $h = U ′ \times c ′$ (20)
   ***h*** is the second channel matrix, ***U'*** is the third basis, and ***c'*** is the second superposition coefficient vector. For example, the second apparatus obtains, based on K position indexes in the second basis selection vector, columns that are in the first basis and that correspond to the K position indexes, to form the third basis ***U'*** by using the corresponding columns, where a dimension of the third basis is *MN* × *K*. For example, ***U'*** satisfies $U ′ ∈ {ℂ}^{MN \times K}$. Optionally, the second channel matrix may further satisfy a variant of formula (20), or satisfy another implementation of generating the second channel matrix based on the second superposition coefficient vector and the third basis. This is not limited in this application.
(2) The first apparatus determines a fourth basis based on a plurality of third channel matrices. The third channel matrix is channel state information, in a spatial-frequency domain dimension, obtained by performing channel estimation based on a second reference signal, the second reference signal is a reference signal received before the first reference signal, and the second reference signal and the first reference signal are reference signals of a same type. For example, the second reference signal is a reference signal received before the first reference signal, that is, the second reference signal is a historical reference signal. The second reference signal may be a reference signal received at a previous moment before the first apparatus receives the first reference signal, or may be a plurality of reference signals separately received at several previous moments before the first apparatus receives the second reference signal. This is not limited in this application. In addition, the second reference signal and the first reference signal are reference signals of a same type (for example, if the first reference signal is a CSI-RS, the second reference signal is also a CSI-RS). The first apparatus performs channel estimation based on the second reference signal, to obtain the third channel matrix in the spatial-frequency domain dimension. Because the statistical covariance matrix of the channel ***h*** represented by the column vector satisfies formula (5), a statistical covariance matrix of the third channel matrix satisfies formula (21): ${R}_{h} = E \left\{h{h}^{H}\right\} = {U}_{h} Λ {U}_{h}^{H}$ (21)
   ***Rₕ*** is the statistical covariance matrix of the third channel matrix, and ***Uₕ*** is a matrix (that is, the fourth basis) formed by eigenvectors of the covariance matrix ***R**ₕ*.
(3) The first apparatus determines that a subspace in which the fourth basis intersects with the first basis is a first common subspace. The subspace in which the fourth basis intersects with the first basis is also referred to as a common subspace between the fourth basis and the first basis. For example, the common subspace between the fourth basis ***Uₕ*** and the first basis ***U*** is represented as ***V*** (that is, the first common subspace is ***V***), and any vector ***v*** in ***V*** satisfies formula (22): $v = {P}_{U} {P}_{{U}_{h}} v$ (22)
   ***P_{U}*** = ***U*(*U***^{H}***U*)⁻¹*U***^{H} is a projection matrix of ***U***, and ${P}_{{U}_{h}} = {U}_{h} {\left({U}_{h}^{H}{U}_{h}\right)}^{- 1} {U}_{h}^{H}$ is a projection matrix of ***U**ₕ*.
(4) The first apparatus determines a first non-common subspace, where the first non-common subspace includes a subspace, in the fourth basis, other than the first common subspace. The subspace, in the fourth basis, other than the first common subspace is also referred to as a non-common subspace, or is referred to as a subspace that is in the fourth basis and that is orthogonal to the first common subspace. For example, the non-common subspace, in the fourth basis ***Uₕ***, other than the first common subspace ***V*** is ***D***, and satisfies formula (23): $D ⊕ V = {U}_{h}$ (23)
   ***D*** is the first non-common subspace, $D ∈ {ℂ}^{MN \times {L}_{1}}$, and ⊕ represents a direct sum of the subspaces.
(5) The first apparatus sends indication information of the first non-common subspace. Correspondingly, the second apparatus receives the indication information of the first non-common subspace. The indication information of the first non-common subspace indicates a projection coefficient of the first non-common subspace on a quantization basis of the first non-common subspace and a column index of the quantization basis of the first non-common subspace. The first non-common subspace is formed by L₁ column vectors. For example, the quantization basis of the first non-common subspace is any one of a DFT codebook, an FFT codebook, an oversampled DFT codebook, an oversampled FFT codebook, or a codebook determined based on a preset rule, and the column vector of the first non-common subspace is determined based on the foregoing codebook.
   Optionally, an implementation of the indication information of the first non-common subspace is similar to that of the indication information of the first basis. For example, the indication information of the first non-common subspace includes the first non-common subspace. That is, the first apparatus directly sends the first non-common subspace ***D*** to the second apparatus. For another example, the indication information of the first non-common subspace includes a projection coefficient of the first non-common subspace on a quantization basis of the first non-common subspace and a column index of the quantization basis of the first non-common subspace. That is, the first apparatus indirectly indicates the first non-common subspace to the second apparatus. It is assumed that the first non-common subspace ***D*** may use an oversampled DFT basis ***W_{d}*** to perform projection quantization (that is, the quantization basis of the first non-common subspace is the oversampled DFT basis ***W_{d}***), and the first non-common subspace ***D*** satisfies formula (24): $D = {W}_{d} {C}_{d}$ (24)
   ***C_{d}*** represents a projection coefficient of ***D*** on the oversampled DFT basis. Based on formula (24), the indication information of the first non-common subspace may include the projection coefficient ***C_{d}*** and the column index of the quantization basis of the first non-common subspace. Optionally, the oversampled DFT basis ***W_{d}*** is known and the same for both the first apparatus and the second apparatus.
(6) The second apparatus performs Schmidt orthogonalization processing on the first basis and the first non-common subspace to obtain a fifth basis. For example, the second apparatus receives the indication information of the first non-common subspace, where the indication information of the first non-common subspace may include the projection coefficient ***C_{d}*** and the column index of the quantization basis of the first non-common subspace. The second apparatus may restore the first non-common subspace ***D*** = ***W_{d}C**_{d}*, and determine that the fifth basis satisfies formula (25): ${U}_{p} = oth \left\{\left[U {W}_{d}{C}_{d}\right]\right\}$ (25)
   ***U**ₚ* represents the fifth basis, and a dimension of the fifth basis is *MN* × (*K* + *L*₁). For example, ***U**ₚ* satisfies ${U}_{p} ∈ {ℂ}^{MN \times \left(K+{L}_{1}\right)}$ ; and *oth*{***A***} indicates that Schmidt orthogonalization processing is performed on each column of the matrix ***A***. Because quantization may damage orthogonality between columns of the basis, orthogonalization processing needs to be performed.

Optionally, the second apparatus sends indication information of the fifth basis. An implementation of the indication information of the fifth basis is similar to that of the indication information of the first basis. For example, if the indication information of the fifth basis includes the fifth basis, the second apparatus sends the fifth basis ***U**ₚ* to the core network device. Correspondingly, the core network device receives the fifth basis ***U**ₚ*. For another example, the indication information of the fifth basis includes a projection coefficient of the fifth basis on a quantization basis of the fifth basis and a column index of the quantization basis of the fifth basis. Optionally, the second apparatus may send the indication information (for example, directly indicate ***D*** or indicate ***W_{d}*** and ***C**_{d}*) of the first non-common subspace, and the first basis ***U*** is known to the core network device. Therefore, after receiving the indication information of the first non-common subspace, the core network device may also determine the fifth basis. That is, the second apparatus indirectly indicates the fifth basis to the core network device. Optionally, the core network device is, for example, an AMF, and the AMF is equivalent to a router for communication between the second apparatus and an LMF/MMF. In this case, the second apparatus sends the fifth basis ***U**ₚ* to the LMF/MMF via the AMF. Optionally, the LMF/MMF may update the channel map based on the fifth basis ***U**ₚ*. For example, the LMF/MMF updates path angle-delay information of a corresponding grid in the channel map based on path angle-delay information corresponding to the fifth basis.

Optionally, the first basis, the second basis, the third basis, the fourth basis, or the fifth basis described in the second part and the third part is a basis of a same type, and the basis of the same type is: a spatial-frequency joint basis, or a spatial domain basis and a frequency domain basis. The spatial-frequency joint basis is a matrix constructed by one or more spatial-frequency domain basis vectors, the spatial domain basis is a matrix constructed by one or more spatial domain basis vectors, and the frequency domain basis is a matrix constructed by one or more frequency domain basis vectors. For example, it is assumed that the first basis is a spatial-frequency joint basis, and the first basis is a matrix constructed by one or more spatial-frequency domain basis vectors, which may represent common characteristics in spatial domain and frequency domain. For another example, it is assumed that the first basis is a spatial domain basis and a frequency domain basis, and the first basis includes a matrix constructed by one or more spatial domain basis vectors and a matrix constructed by one or more frequency domain basis vectors (for example, a set of matrices), which respectively represent characteristics in spatial domain and frequency domain.

In this embodiment, the first apparatus may determine, based on the restored CSI information and the historical CSI information, the historical channel basis associated with the historical CSI information, and update and report the channel basis based on the historical channel basis, so that both the second apparatus and the core network device can obtain updated channel basis information. This helps improve accuracy of channel estimation.

2. Interaction procedure between the first apparatus and the second apparatus when different reference signals are used and whether to update the channel basis is determined

### Example 1: Scheme used when the first reference signal is a CSI-RS and the channel basis is not updated

In Example 1, the second apparatus uses a region-level channel basis provided by a channel map as prior information (for example, the first basis may be a spatial-frequency joint basis ***U***, or a spatial domain basis ***U**_{S}* and a frequency domain basis ***U**_{F}*, or may be a spatial domain compression matrix ***W***ₛ and a frequency domain compression matrix ***W**_{f}*, and Example 1 uses the spatial-frequency joint basis ***U*** as an example for description), and delivers the region-level channel basis and the first reference signal. Correspondingly, the first apparatus computes a short-periodicity coefficient based on the region-level channel basis and the first reference signal, and reports the short-periodicity coefficient and a position index in the first basis. The second apparatus restores full-dimensional CSI based on the full-dimensional channel basis and the short-periodicity coefficient that are provided by the map, and the position index in the first basis.

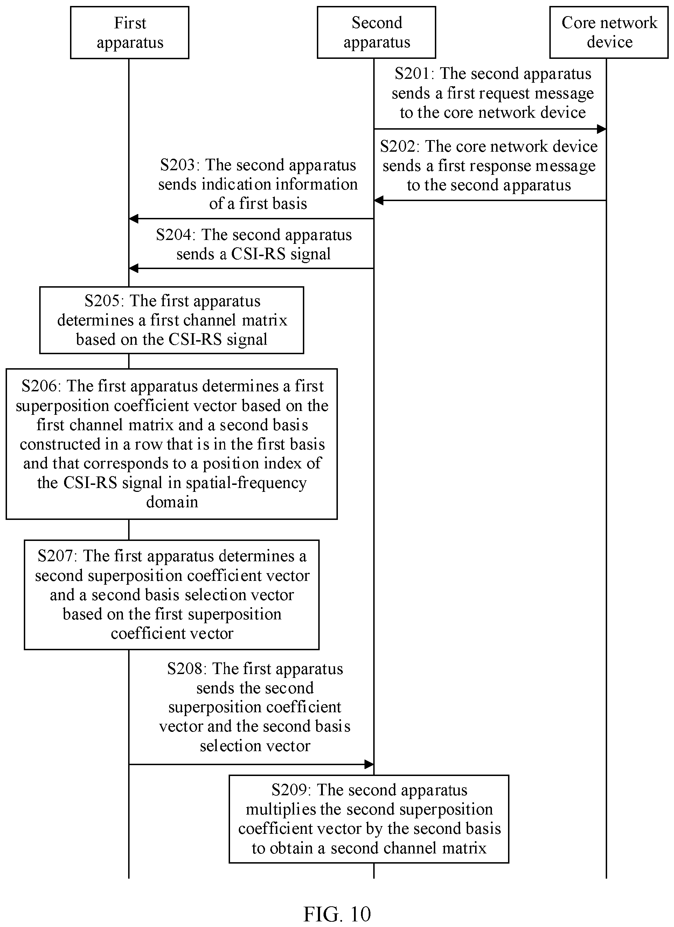

For example, FIG. 10 is a diagram of a downlink channel reconstruction procedure enabled based on a channel map and a CSI-RS according to this application. The procedure is implemented through interaction between a first apparatus, a second apparatus, and a core network device. The core network device in this application may be an AMF/LMF/MMF. The procedure includes the following steps.

S201: The second apparatus sends a first request message to the core network device, where the first request message requests to obtain the channel map, or requests to obtain basis information corresponding to the first apparatus in the channel map. Correspondingly, the core network device receives the first request message.

S202: The core network device sends a first response message to the second apparatus, where the first response message includes the channel map, or the basis information corresponding to the first apparatus in the channel map. Correspondingly, the second apparatus receives the first response message.

For example, the channel map is shown in FIG. 3. When the first apparatus moves to any grid in the channel map, the second apparatus may trigger the first request message, to request to obtain the entire channel map, or request to obtain the basis information corresponding to the first apparatus in the channel map. The basis information is determined based on the channel map. For example, if a spatial-frequency joint basis may be determined based on path angle-delay information of the channel map, a spatial-frequency joint basis corresponding to the first apparatus is determined based on path angle-delay information of a grid in which the first apparatus is located. Optionally, the core network device includes, for example, an AMF/LMF/MMF. For interaction between the second apparatus and the core network device, refer to corresponding descriptions in S101. Details are not described herein again.

S203: The second apparatus sends indication information of a first basis. Correspondingly, the first apparatus receives the indication information of the first basis.

For a specific implementation of S202, refer to corresponding descriptions in S101. For example, it is assumed that the first basis is a spatial-frequency joint basis ***U***, the second apparatus sends, to the first apparatus through a PDCCH/PDSCH, the spatial-frequency joint basis $U ∈ {ℂ}^{MN \times L}$ corresponding to the first apparatus, or sends, to the first apparatus, ***C*₁₃** and a column index of the first basis in a quantization basis of the first basis. Details are not described herein again.

Optionally, when the first basis is a spatial domain basis ***U**_{S}* or a frequency domain basis ***U**_{F}*, or may be a spatial domain compression matrix ***W***ₛ, a frequency domain compression matrix ***W**_{f}*, or the like, a processing procedure is similar to the procedure described in S101. For example, it is assumed that the first basis includes a spatial domain basis ***U**_{S}* and a frequency domain basis ***U**_{F}*. The second apparatus sends, to the first apparatus, the spatial domain basis ***U**_{S}* and the frequency domain basis ***U**_{F}* corresponding to the first apparatus, or sends, to the first apparatus, projection coefficients of the spatial domain basis ***U**_{S}* and the frequency domain basis ***U**_{F}* on the quantization basis ***B*** of the first basis, and column indexes of the first quantization basis.

S204: The second apparatus sends a CSI-RS signal. Correspondingly, the first apparatus receives the CSI-RS signal.

For a specific implementation of S203, refer to corresponding descriptions in S102. For example, the second apparatus sends the CSI-RS signal to the first apparatus, to perform downlink channel measurement. Optionally, density *ρ* of the CSI-RS signal is in direct proportion to a quantity *L* of columns of the first basis. For example, the second apparatus may reduce the density of the CSI-RS signal, thereby reducing CSI-RS signal overheads.

S205: The first apparatus determines a first channel matrix based on the CSI-RS signal.

S206: The first apparatus determines a first superposition coefficient vector based on the first channel matrix and a second basis constructed in a row that is in the first basis and that corresponds to a position index of the CSI-RS signal in spatial-frequency domain.

For specific implementations of S205 and S206, refer to corresponding descriptions in S103 and S104. For example, the first apparatus estimates the corresponding first channel matrix ${h}_{s} ∈ {ℂ}^{{M}_{1} {N}_{1} \times 1}$ based on the received CSI-RS signal, and searches for the corresponding row in the first basis based on the position index of the CSI-RS signal in spatial-frequency domain, to form the second basis ${U}_{s} ∈ {ℂ}^{{M}_{1} {N}_{1} \times L}$, thereby determining the first superposition coefficient vector ***c***.

S207: The first apparatus determines a second superposition coefficient vector and a second basis selection vector based on the first superposition coefficient vector.

S208: The first apparatus sends the second superposition coefficient vector and the second basis selection vector. Correspondingly, the second apparatus receives the second superposition coefficient vector and the second basis selection vector.

For specific implementations of S207 and S208, refer to corresponding descriptions in S105. For example, the first apparatus selects K superposition coefficients with largest amplitudes from the first superposition coefficient vector to form the second superposition coefficient vector, and determines K position indexes of the K superposition coefficients in the first superposition coefficient vector to form the second basis selection vector. The first apparatus sends the second superposition coefficient vector (including the K superposition coefficients) and the second basis selection vector (including the K index values) to the second apparatus.

S209: The second apparatus multiplies the second superposition coefficient vector by the second basis to obtain a second channel matrix.

For a specific implementation of S209, refer to the description of the second channel matrix in the third part. Details are not described herein again. Therefore, the second apparatus restores CSI information.

Optionally, when the first reference signal is another downlink reference signal (for example, an SSB/DMRS) and the channel map is not updated, a specific implementation procedure is similar to an implementation of Example 1. For example, the first reference signal serving as the CSI-RS is replaced with another downlink reference signal, and other procedures remain unchanged. Details are not described herein again.

In Example 1, the first basis is a region-level channel basis provided by the channel map, and the second apparatus delivers the first basis to the first apparatus as prior information, which helps reduce reference signal overheads. In addition, compared with feeding back the entire channel basis, the first apparatus feeds back only the position index in the first basis and a short-periodicity superposition coefficient, which can reduce feedback overheads.

Example 2: Scheme used when the first reference signal is a CSI-RS, and the channel map is updated
In Example 2, based on Example 1, a procedure in which the first apparatus computes a statistical channel basis based on a historical CSI reconstruction result, and updates and reports newly added channel basis information is added, thereby implementing channel basis information update, which helps improve channel reconstruction precision.

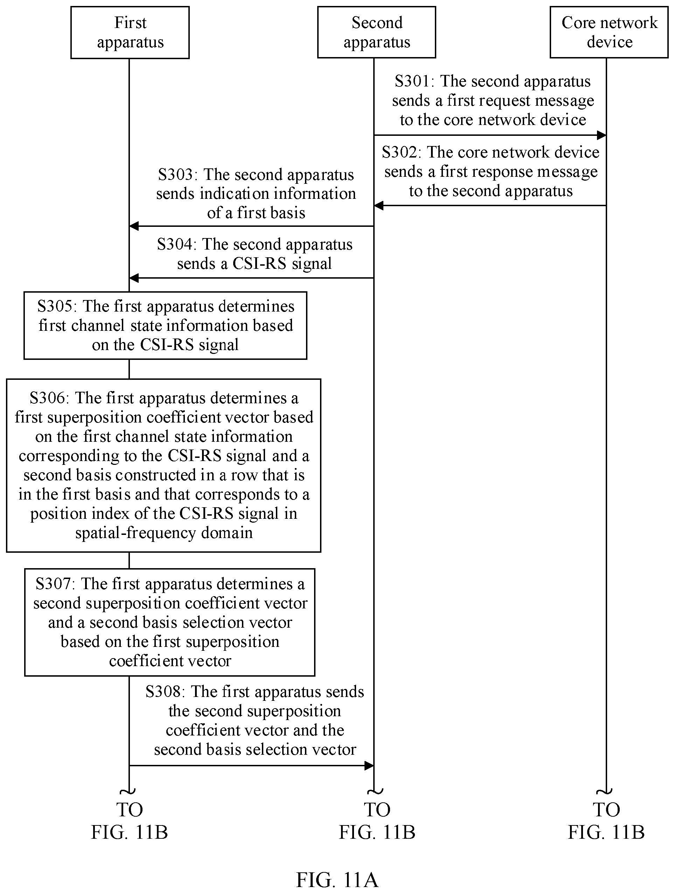

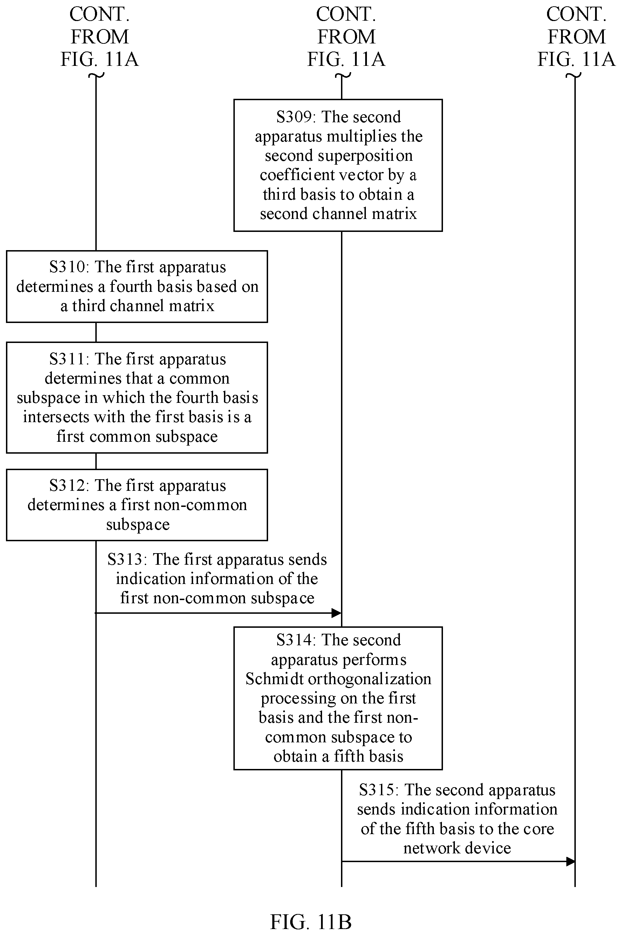

For example, FIG. 11A and FIG. 11B are a diagram of a downlink channel reconstruction and channel basis update procedure enabled based on a channel map and a CSI-RS according to this application. The procedure is implemented through interaction between a first apparatus, a second apparatus, and a core network device. The procedure includes the following steps.

S301: The second apparatus sends a first request message to the core network device, where the first request message requests to obtain the channel map, or requests to obtain basis information corresponding to the first apparatus in the channel map. Correspondingly, the core network device receives the first request message.

S302: The core network device sends a first response message to the second apparatus, where the first response message includes the channel map, or the basis information corresponding to the first apparatus in the channel map. Correspondingly, the second apparatus receives the first response message.

S303: The second apparatus sends indication information of a first basis. Correspondingly, the first apparatus receives the indication information of the first basis.

S304: The second apparatus sends a CSI-RS signal. Correspondingly, the first apparatus receives the CSI-RS signal.

S305: The first apparatus determines first channel state information based on the CSI-RS signal.

S306: The first apparatus determines a first superposition coefficient vector based on the first channel state information corresponding to the CSI-RS signal and a second basis constructed in a row that is in the first basis and that corresponds to a position index of the CSI-RS signal in spatial-frequency domain.

S307: The first apparatus determines a second superposition coefficient vector and a second basis selection vector based on the first superposition coefficient vector.

S308: The first apparatus sends the second superposition coefficient vector and the second basis selection vector. Correspondingly, the second apparatus receives the second superposition coefficient vector and the second basis selection vector.

S309: The second apparatus multiplies the second superposition coefficient vector by a third basis to obtain a second channel matrix.

For specific implementations of S301 to S309, refer to corresponding descriptions in S101 to S105 and S201 to S209. Details are not described herein again.

S310: The first apparatus determines a fourth basis based on a third channel matrix.

For a specific implementation of this step, refer to descriptions of the fourth basis and the third channel matrix in the third part. For example, the third channel matrix is channel state information, in a spatial-frequency domain dimension, obtained by performing channel estimation based on a second reference signal; the second reference signal is a reference signal received before the first reference signal, that is, the second reference signal is a historical reference signal; the second reference signal and the first reference signal are reference signals of a same type (for example, if the first reference signal is a CSI-RS, the second reference signal is also a CSI-RS); and the fourth basis satisfies formula (21), and other related descriptions. Details are not described herein again.

S311: The first apparatus determines that a common subspace in which the fourth basis intersects with the first basis is a first common subspace.

S312: The first apparatus determines a first non-common subspace, where the first non-common subspace includes a subspace, in the fourth basis, other than the first common subspace.

For specific implementations of S311 and S312, refer to descriptions of the first non-common subspace, the first common subspace, and the common subspace in which the fourth basis intersects with the first basis in the third part. For example, the first non-common subspace ***D*** satisfies formula (23), the first common subspace ***V*** is a common subspace between the fourth basis ***Uₕ*** and the first basis ***U***, and any vector ***v*** in ***V*** satisfies formula (22), and other related descriptions. Details are not described herein again.

S313: The first apparatus sends indication information of the first non-common subspace. Correspondingly, the second apparatus receives the indication information of the first non-common subspace.

For a specific implementation of S313, refer to the description of the indication information of the first non-common subspace in the third part. For example, the first apparatus directly sends the first non-common subspace ***D*** to the second apparatus, or sends a projection coefficient of the first non-common subspace on a quantization basis of the first non-common subspace, a column index of the quantization basis of the first non-common subspace, and other related descriptions to the second apparatus. Details are not described herein again.

S314: The second apparatus performs Schmidt orthogonalization processing on the first basis and the first non-common subspace to obtain a fifth basis.

S315: The second apparatus sends indication information of the fifth basis to the core network device.

For specific implementations of S314 and S315, refer to descriptions of the fifth basis and the indication information of the fifth basis in the third part. For example, the fifth basis ***U**ₚ* satisfies formula (25) and other related descriptions. Details are not described herein again.

Optionally, when the first reference signal is another downlink reference signal (for example, an SSB/DMRS) and the channel map is not updated, a specific implementation procedure is similar to an implementation of Example 2. For example, the first reference signal serving as the CSI-RS is replaced with another downlink reference signal, and other procedures remain unchanged. Details are not described herein again.

In Example 2, the first basis is a region-level channel basis provided by the channel map, and the second apparatus delivers the first basis to the first apparatus as prior information, which helps reduce reference signal overheads. In addition, compared with feeding back the entire channel basis, the first apparatus feeds back only the position index in the first basis and a short-periodicity superposition coefficient, which can reduce feedback overheads. In addition, the first apparatus may update and report the channel basis based on historical CSI information and restored CSI information, which helps further update the channel map and improve accuracy of the channel map.

Example 3: Scheme used when the first reference signal is a CSI-RS, and the first apparatus sends a third reference signal, to enable the second apparatus to perform channel estimation based on the first reference signal and the third reference signal
In Example 3, based on Example 1, a procedure in which the first apparatus sends the third reference signal (for example, an uplink reference signal SRS), to enable the second apparatus to perform channel estimation based on the third reference signal and restore CSI is added, which helps improve CSI reconstruction precision.

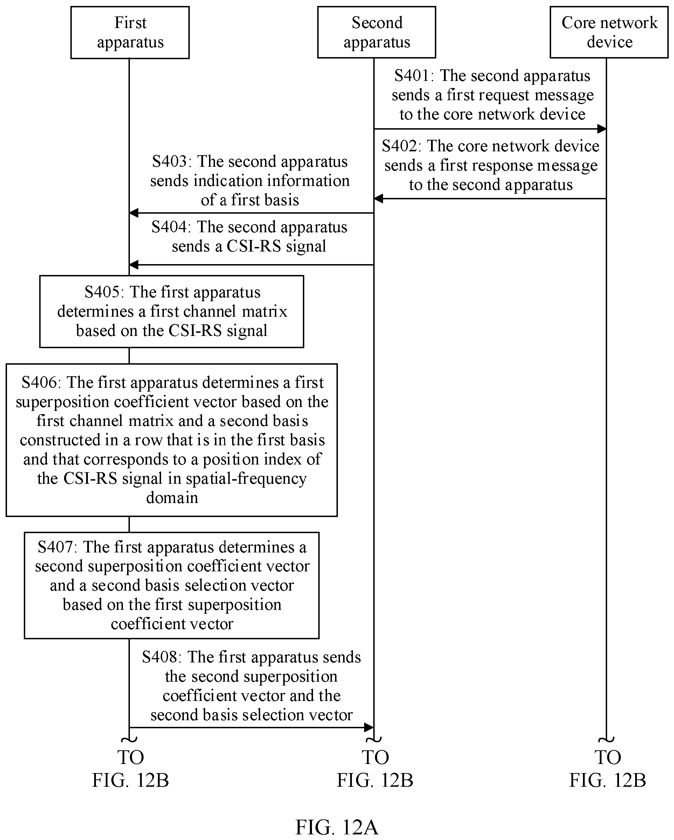

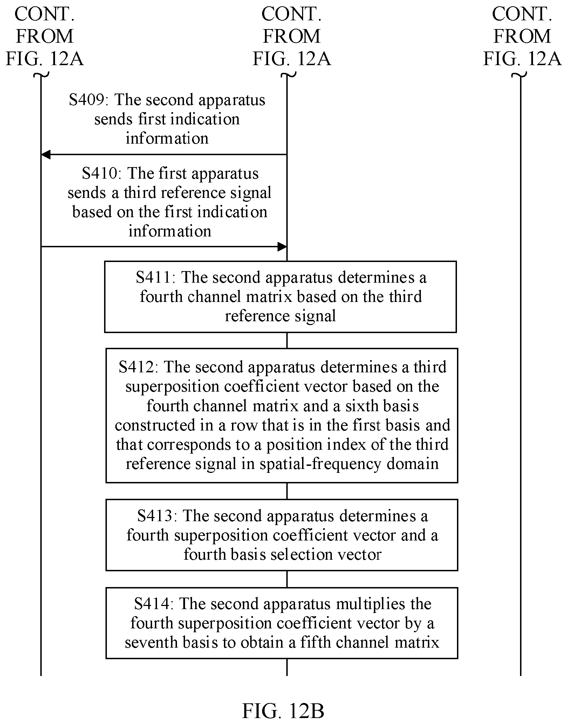

For example, FIG. 12A and FIG. 12B are a diagram of a downlink channel reconstruction procedure enabled based on a channel map, a CSI-RS, and an SRS according to this application. The procedure is implemented through interaction between a first apparatus, a second apparatus, and a core network device. The procedure includes the following steps.

S401: The second apparatus sends a first request message to the core network device, where the first request message requests to obtain the channel map, or requests to obtain basis information corresponding to the first apparatus in the channel map. Correspondingly, the core network device receives the first request message.

S402: The core network device sends a first response message to the second apparatus, where the first response message includes the channel map, or the basis information corresponding to the first apparatus in the channel map. Correspondingly, the second apparatus receives the first response message.

S403: The second apparatus sends indication information of a first basis. Correspondingly, the first apparatus receives the indication information of the first basis.

S404: The second apparatus sends a CSI-RS signal. Correspondingly, the first apparatus receives the CSI-RS signal.

S405: The first apparatus determines a first channel matrix based on the CSI-RS signal.

S406: The first apparatus determines a first superposition coefficient vector based on the first channel matrix and a second basis constructed in a row that is in the first basis and that corresponds to a position index of the CSI-RS signal in spatial-frequency domain.

S407: The first apparatus determines a second superposition coefficient vector and a second basis selection vector based on the first superposition coefficient vector.

S408: The first apparatus sends the second superposition coefficient vector and the second basis selection vector. Correspondingly, the second apparatus receives the second superposition coefficient vector and the second basis selection vector.

For specific implementations of S401 to S408, refer to corresponding descriptions in S101 to S105 and S201 to S208. Details are not described herein again.

S409: The second apparatus sends first indication information. Correspondingly, the first apparatus receives the first indication information.

S410: The first apparatus sends a third reference signal based on the first indication information. Correspondingly, the second apparatus receives the third reference signal.

The third reference signal is used to measure channel information, and may be specifically an uplink reference signal. For example, the uplink reference signal may include an SRS or the like. This is not limited in this application.

The first indication information indicates a frequency domain position of the third reference signal. For example, it is assumed that the third reference signal is an SRS, and the first indication information indicates a frequency domain position of the SRS, for example, indicates a frequency domain unit (such as an RE/RB) for carrying the SRS.

Optionally, the first indication information may further indicate a resource pattern of the third reference signal. For example, it is assumed that the third reference signal is an SRS, and the second apparatus may indicate a resource pattern (for example, an SRS pattern) of the uplink reference signal to the first apparatus by using the first indication information.

Optionally, the first indication information indicates density of the third reference signal, and the density of the third reference signal is positively correlated with a length of the second superposition coefficient vector. Specifically, the density of the third reference signal is in direct proportion to the length of the second superposition coefficient vector. For example, a smaller length of the second superposition coefficient vector indicates a smaller quantity of channel multipaths, and therefore values for which channel measurement needs to be performed are fewer. Correspondingly, fewer reference signals need to be sent, and therefore the density of the third reference signal is also lower. Optionally, the second apparatus may set the density of the third reference signal based on the length of the second superposition coefficient vector. For example, a spatial domain granularity of the third reference signal is reduced from *M* to *M*₂, and a frequency domain granularity is reduced from *N* to *N*₂, thereby reducing reference signal overheads.

S411: The second apparatus determines a fourth channel matrix based on the third reference signal.

S412: The second apparatus determines a third superposition coefficient vector based on the fourth channel matrix and a sixth basis constructed in a row that is in the first basis and that corresponds to a position index of the third reference signal in spatial-frequency domain.

The second apparatus may perform channel estimation based on the third reference signal, to obtain that the fourth channel matrix is channel state information of the third reference signal in a spatial-frequency domain dimension. For example, it is assumed that the third reference signal is an SRS signal, and the first apparatus performs channel estimation on the SRS signal to obtain a fourth channel matrix ${h}_{srs}^{s}$ in a spatial-frequency domain dimension. A dimension of the fourth channel matrix is *M*₂*N*₂ × 1. For example, ${h}_{srs}^{s}$ satisfies ${h}_{srs}^{s} ∈ {ℂ}^{{M}_{2} {N}_{2} \times 1}$, where *M*₂ is a spatial domain granularity of the third reference signal, and *N*₂ is a frequency domain granularity of the third reference signal.

The sixth basis constructed in the row that is in the first basis and that corresponds to the position index of the third reference signal in spatial-frequency domain is ${U}_{p}^{s}$. A dimension of the sixth basis is *M*₂*N*₂ × *L*. For example, ${U}_{p}^{s}$ satisfies ${U}_{p}^{s} ∈ {ℂ}^{{M}_{2} {N}_{2} \times L}$ . For example, the second apparatus receives the third reference signal, and may determine position indexes of the third reference signal in spatial-frequency domain; and obtains, from the first basis based on the position indexes (*M*₂ and *N*₂) of the third reference signal in spatial-frequency domain, a row corresponding to the position indexes, to form the sixth basis ${U}_{p}^{s}$. A quantity of columns of the sixth basis is the same as that of the first basis.

The third superposition coefficient vector is determined based on the fourth channel matrix and the sixth basis constructed in the row that is in the first basis and that corresponds to the position index of the third reference signal in spatial-frequency domain, and satisfies formula (26): ${c}_{srs} = pinv \left({U}_{p}^{s}\right) \times {h}_{srs}^{s}$ (26)

***cₛᵣₛ*** is the third superposition coefficient vector, ${h}_{srs}^{s}$ is the fourth channel matrix, ${U}_{p}^{s}$ is the sixth basis, and *pinv*(***A***)represents a pseudo-inverse of the matrix *A*. Optionally, formula (26) is merely an example, and the third superposition coefficient vector may alternatively satisfy a variation based on formula (26), or satisfy another generation manner based on ${h}_{srs}^{s}$ and ${U}_{p}^{s}$. This is not limited in this application. The third superposition coefficient vector includes E superposition coefficients, a dimension of the third superposition coefficient vector is E*1, and E is a positive integer. For example, ***cₛᵣₛ*** satisfies ${c}_{srs} ∈ {ℂ}^{E \times 1}$.

S413: The second apparatus determines a fourth superposition coefficient vector and a fourth basis selection vector.

The fourth superposition coefficient vector includes F superposition coefficients, and the F superposition coefficients are F elements with largest amplitudes in the third superposition coefficient vector. F is a positive integer less than or equal to E. The fourth basis selection vector includes position indexes (for example, including F index values) of the F superposition coefficients in the third superposition coefficient vector. It may be understood that specific implementations of the fourth superposition coefficient vector and the fourth basis selection vector are similar to specific implementations of the second superposition coefficient vector and the second basis selection vector. For details, refer to the foregoing corresponding descriptions. Details are not described herein again.

S414: The second apparatus multiplies the fourth superposition coefficient vector by a seventh basis to obtain a fifth channel matrix.

The seventh basis is formed by columns that are in the fifth basis and that correspond to the F position indexes in the fourth basis selection vector. For example, similar to formula (20), the fifth channel matrix satisfies formula (27): ${h}_{srs} = {U}_{p}^{′} \times {c}_{srs}^{′}$ (27)

***hₛᵣₛ*** is the fifth channel matrix, ${U}_{p}^{′}$ is the seventh basis, and ${c}_{srs}^{′}$ is the fourth superposition coefficient vector. For example, the second apparatus obtains, based on F position indexes in the fourth basis selection vector, columns that are in the fifth basis and that correspond to the F position indexes, to form the seventh basis ${U}_{p}^{′}$ by using the corresponding columns, where a dimension of the seventh basis is *MN* × *F*. For example, ${U}_{p}^{′}$ satisfies ${U}_{p}^{′} ∈ {ℂ}^{MN \times F}$. Optionally, the fifth channel matrix may further satisfy a variant of formula (27), or satisfy another implementation of generating the fifth channel matrix based on the fourth superposition coefficient vector and the seventh basis. This is not limited in this application.

In Example 3, the first basis is a region-level channel basis provided by the channel map, and the second apparatus delivers the first basis to the first apparatus as prior information, which helps reduce reference signal overheads. In addition, compared with feeding back the entire channel basis, the first apparatus feeds back only the position index in the first basis and a short-periodicity superposition coefficient, which can reduce feedback overheads. In addition, the first apparatus may further send an uplink reference signal, so that the second apparatus restores CSI based on the uplink reference signal and the downlink reference signal, which helps improve CSI reconstruction precision.

Example 4: Scheme used when the first reference signal is a CSI-RS, and the first apparatus sends a third reference signal, to enable the second apparatus to perform channel estimation and channel basis update based on the first reference signal and the third reference signal

In Example 4, based on Example 3, a procedure in which the second apparatus computes a statistical channel basis based on a historical CSI reconstruction result, and updates and reports newly added channel basis information is added, thereby implementing channel basis information update, which helps improve channel reconstruction precision.

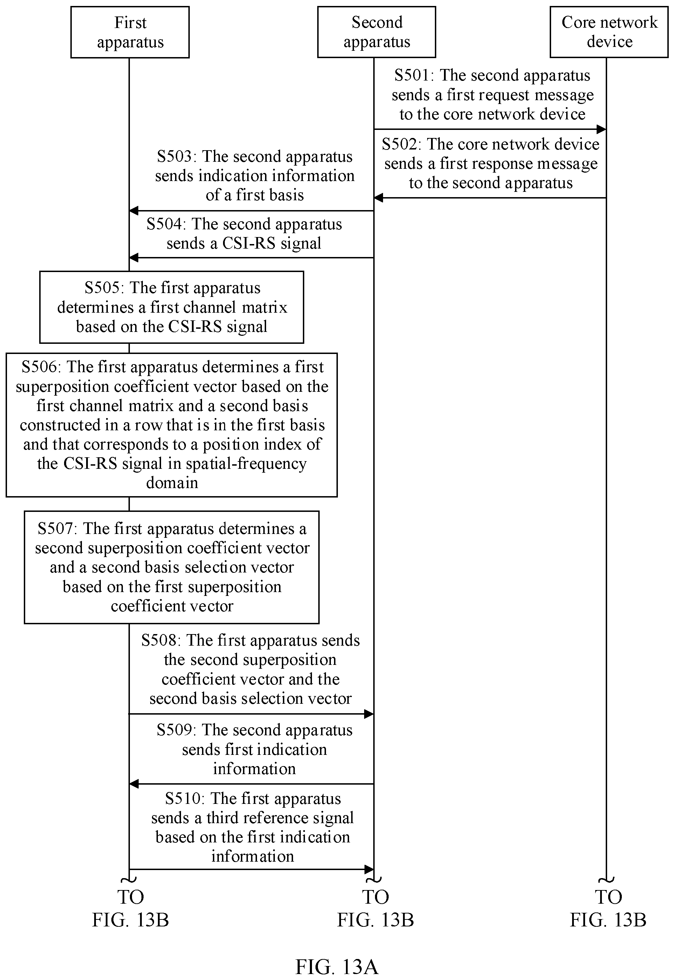

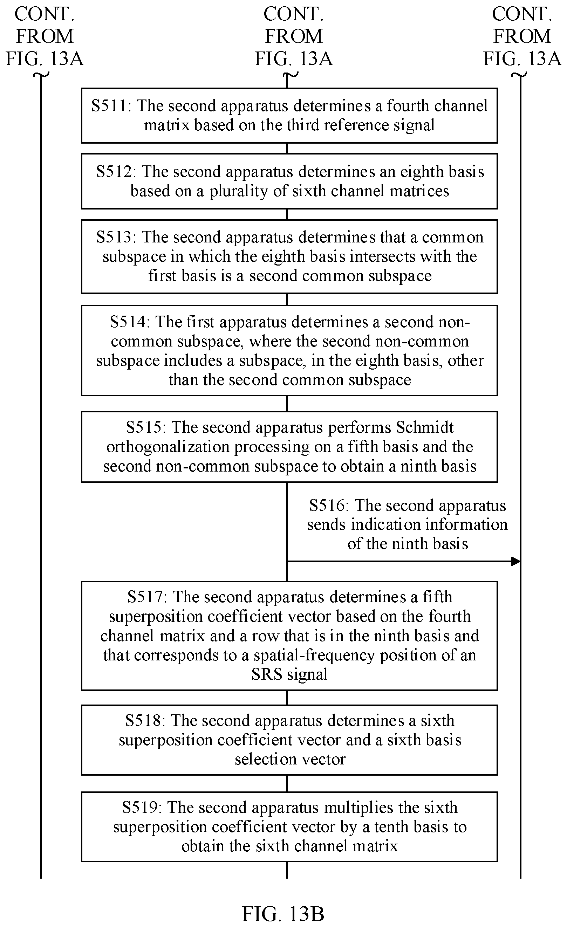

For example, FIG. 13A and FIG. 13B are a diagram of a downlink channel reconstruction and channel basis update procedure enabled based on a channel map, a CSI-RS, and an SRS according to this application. The procedure is implemented through interaction between a first apparatus, a second apparatus, and a core network device. The procedure includes the following steps.

S501: The second apparatus sends a first request message to the core network device, where the first request message requests to obtain the channel map, or requests to obtain basis information corresponding to the first apparatus in the channel map. Correspondingly, the core network device receives the first request message.

S502: The core network device sends a first response message to the second apparatus, where the first response message includes the channel map, or the basis information corresponding to the first apparatus in the channel map. Correspondingly, the second apparatus receives the first response message.

S503: The second apparatus sends indication information of a first basis. Correspondingly, the first apparatus receives the indication information of the first basis.

S504: The second apparatus sends a CSI-RS signal. Correspondingly, the first apparatus receives the CSI-RS signal.

S505: The first apparatus determines a first channel matrix based on the CSI-RS signal.

S506: The first apparatus determines a first superposition coefficient vector based on the first channel matrix and a second basis constructed in a row that is in the first basis and that corresponds to a position index of the CSI-RS signal in spatial-frequency domain.

S507: The first apparatus determines a second superposition coefficient vector and a second basis selection vector based on the first superposition coefficient vector.

S508: The first apparatus sends a second superposition coefficient vector and a second basis selection vector. Correspondingly, the second apparatus receives the second superposition coefficient vector and the second basis selection vector.

S509: The second apparatus sends the first indication information. Correspondingly, the first apparatus receives the first indication information.

S510: The first apparatus sends a third reference signal based on the first indication information. Correspondingly, the second apparatus receives the third reference signal.

For specific implementations of S501 to S510, refer to corresponding descriptions in S101 to S105 and S401 to S410. Details are not described herein again.

S511: The second apparatus determines a fourth channel matrix based on the third reference signal.

For example, it is assumed that the third reference signal is an SRS signal, and the first apparatus performs channel estimation on the SRS signal to obtain a fourth channel matrix ${h}_{srs}^{s}$ in a spatial-frequency domain dimension. A dimension of the fourth channel matrix is *M*₂*N*₂ × 1. For example, ${h}_{srs}^{s}$ satisfies ${h}_{srs}^{s} ∈ {ℂ}^{{M}_{2} {N}_{2} \times 1}$, where *M*₂ is a spatial domain granularity of the third reference signal, and *N*₂ is a frequency domain granularity of the third reference signal.

S512: The second apparatus determines an eighth basis based on a plurality of sixth channel matrices.

The sixth channel matrix is channel state information, in a spatial-frequency domain dimension, obtained by performing channel estimation based on a fourth reference signal, the fourth reference signal is a reference signal received before the third reference signal, and the fourth reference signal and the third reference signal are reference signals of a same type. For example, the fourth reference signal is a reference signal received before the third reference signal, that is, the fourth reference signal is a historical reference signal. The fourth reference signal may be a reference signal received at a previous moment before the second apparatus receives the third reference signal, or may be a plurality of reference signals separately received at several previous moments before the second apparatus receives the third reference signal. This is not limited in this application. In addition, the fourth reference signal and the third reference signal are reference signals of a same type (for example, if the third reference signal is an SRS, the fourth reference signal is also an SRS). The second apparatus performs channel estimation based on the fourth reference signal, and may obtain the sixth channel matrix in the spatial-frequency domain dimension. Because the statistical covariance matrix of the channel ***h*** represented by the column vector satisfies formula (5), a statistical covariance matrix of the sixth channel matrix also satisfies formula (21).

S513: The second apparatus determines that a common subspace in which the eighth basis intersects with the first basis is a second common subspace.

S514: The first apparatus determines a second non-common subspace, where the second non-common subspace includes a subspace, in the eighth basis, other than the second common subspace.

The common subspace in which the eighth basis intersects with the first basis is also referred to as the second common subspace. For example, any vector ***v*** in the second common subspace also satisfies formula (22). The subspace, in the eighth basis, other than the second common subspace is also referred to as the second non-common subspace, or is referred to as a subspace that is in the eighth basis and that is orthogonal to the second common subspace. For example, the second non-common subspace, in the eighth basis, other than the second common subspace also satisfies formula (23).

S515: The second apparatus performs Schmidt orthogonalization processing on a fifth basis and the second non-common subspace to obtain a ninth basis.

S516: The second apparatus sends indication information of the ninth basis. Correspondingly, the core network device receives the indication information of the ninth basis.

For example, similar to formula (25), the second apparatus determines that the ninth basis satisfies formula (28): ${U}_{p ′} = oth \left\{\left[{U}_{p} D′\right]\right\}$ (28)

***U_{p'}*** represents the ninth basis, and a dimension of the ninth basis is *MN* × (*K* + *L*₁ + *L*₂). For example, ***U*_{*p*'}** satisfies ${U}_{p ′} ∈ {ℂ}^{MN \times \left(K+{L}_{1}+{L}_{2}\right)}$, ***Uₚ*** represents the fifth basis, and ***D*'** represents the second non-common subspace.

Optionally, the second apparatus sends the indication information of the ninth basis. An implementation of the indication information of the ninth basis is similar to that of the indication information of the first basis. For example, if the indication information of the ninth basis includes the ninth basis, the second apparatus sends the ninth basis ***U_{p'}*** to the core network device. Correspondingly, the core network device receives the ninth basis ***U_{p'}***. For another example, the indication information of the ninth basis includes a projection coefficient of the ninth basis on a quantization basis of the ninth basis and a column index of the quantization basis of the ninth basis. Optionally, the second apparatus may send indication information of the second non-common subspace (for example, directly indicate ***D'*** or indicate a column index of a quantization basis of the second non-common subspace and a projection coefficient of the second non-common subspace), and the fifth basis ***U**ₚ* is known to the core network device. Therefore, after receiving the indication information of the second non-common subspace, the core network device may also determine the ninth basis. That is, the second apparatus indirectly indicates the ninth basis to the core network device. Optionally, the core network device is, for example, an AMF, and the AMF is equivalent to a router for communication between the second apparatus and an LMF/MMF. In this case, the second apparatus sends the ninth basis to the LMF/MMF via the AMF. Optionally, the LMF/MMF may update the channel map based on the ninth basis. For example, the LMF/MMF updates path angle-delay information of a corresponding grid in the channel map based on path angle-delay information corresponding to the ninth basis.

S517: The second apparatus determines a fifth superposition coefficient vector based on the fourth channel matrix and a row that is in the ninth basis and that corresponds to a spatial-frequency position of an SRS signal.

The fifth superposition coefficient vector includes P superposition coefficients, and P is a positive integer. For a specific implementation of this step, refer to corresponding descriptions in S104. For example, the second apparatus searches for a corresponding row in the ninth basis based on a position index of the SRS signal in spatial-frequency domain, and determines that the fifth superposition coefficient vector satisfies formula (29): ${c}_{srs} ′ = pinv \left({U}_{p}^{s ′}\right) \times {h}_{srs}^{s}$ (29)

***cₛᵣₛ*'** is the fifth superposition coefficient vector, ${h}_{srs}^{s}$ is the fourth channel matrix, and ${U}_{p}^{s ′}$ is formed by the row that is in the ninth basis and that corresponds to the position index of the third reference signal in spatial-frequency domain.

S518: The second apparatus determines a sixth superposition coefficient vector and a sixth basis selection vector.

The sixth superposition coefficient vector includes Q superposition coefficients, and the Q superposition coefficients are Q elements with largest element amplitudes in the fifth superposition coefficient vector. The sixth basis selection vector includes position indexes of the Q superposition coefficients in the fifth superposition coefficient vector, and Q is a positive integer less than or equal to P.

For a specific implementation of this step, refer to descriptions in S104. For example, the sixth superposition coefficient vector is ${c}_{srs}^{′}$, which is similar to an implementation of the second superposition coefficient vector, and an implementation of the sixth basis selection vector is similar to that of the second basis selection vector.

S519: The second apparatus multiplies the sixth superposition coefficient vector by a tenth basis to obtain the sixth channel matrix.

The tenth basis is formed by columns that are in the ninth basis and that correspond to the Q position indexes in the sixth basis selection vector. For example, for a specific implementation of this step, refer to the specific implementation of the second channel matrix described in the third part. Similar to formula (20), the sixth channel matrix satisfies formula (30): ${h}_{srs}^{′} = {U}_{p ′}^{′} \times {c}_{srs}^{′}$ (30) ${h}_{srs}^{′}$ is the sixth channel matrix, ${c}_{srs}^{′}$ is the sixth superposition coefficient vector, and $U {′}_{p ′}$ is the tenth basis. For example, the second apparatus obtains, based on Q position indexes in the sixth basis selection vector, columns that are in the ninth basis and that correspond to the Q position indexes, to form the tenth basis $U {′}_{p ′}$ by using the corresponding columns, where a dimension of the tenth basis is *MN* × *Q*. For example, $U {′}_{p ′}$ satisfies ${U}_{p}^{′} ∈ {ℂ}^{MN \times Q}$. Optionally, the sixth channel matrix may further satisfy a variant of formula (30), or satisfy another implementation of generating the sixth channel matrix based on the sixth superposition coefficient vector and the tenth basis. This is not limited in this application.

In Example 4, the first basis is a region-level channel basis provided by the channel map, and the second apparatus delivers the first basis to the first apparatus as prior information, which helps reduce reference signal overheads. In addition, the first apparatus feeds back only the position index in the first basis and a short-periodicity superposition coefficient, which helps reduce feedback overheads. In addition, the first apparatus may further send an uplink reference signal, so that the second apparatus restores CSI based on the uplink reference signal and a downlink reference signal, which helps improve CSI reconstruction precision. In addition, the first apparatus may update and report the channel basis based on historical CSI information and restored CSI information, which helps further update the channel map and improve accuracy of the channel map.

Example 5: Scheme used when the first apparatus sends a third reference signal, to enable the second apparatus to perform channel estimation and channel basis update based on the third reference signal.

The channel estimation scheme provided in Example 5 may be a scheme in which the second apparatus directly performs channel estimation and channel basis update (not based on a CSI-RS) based on an SRS, and can improve channel reconstruction precision.

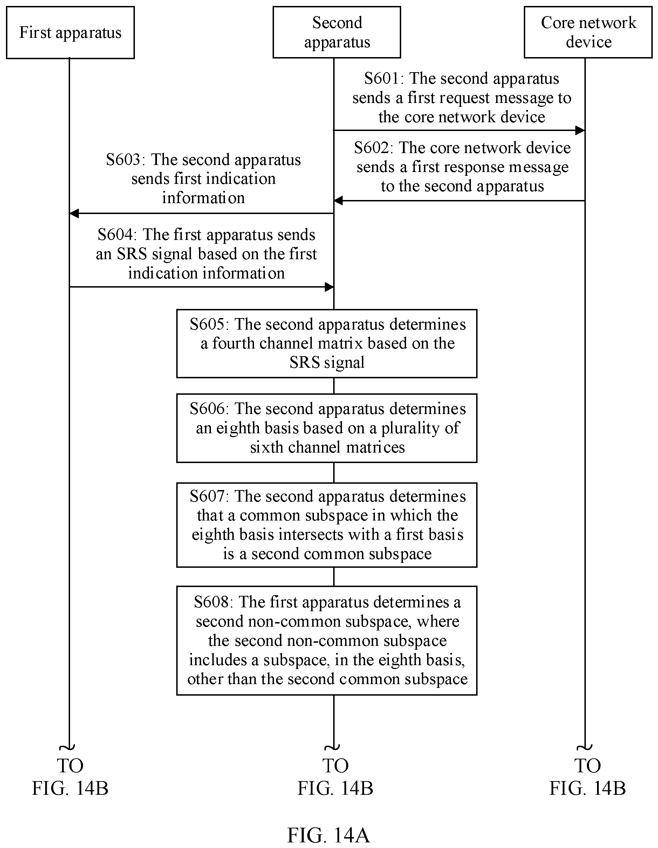

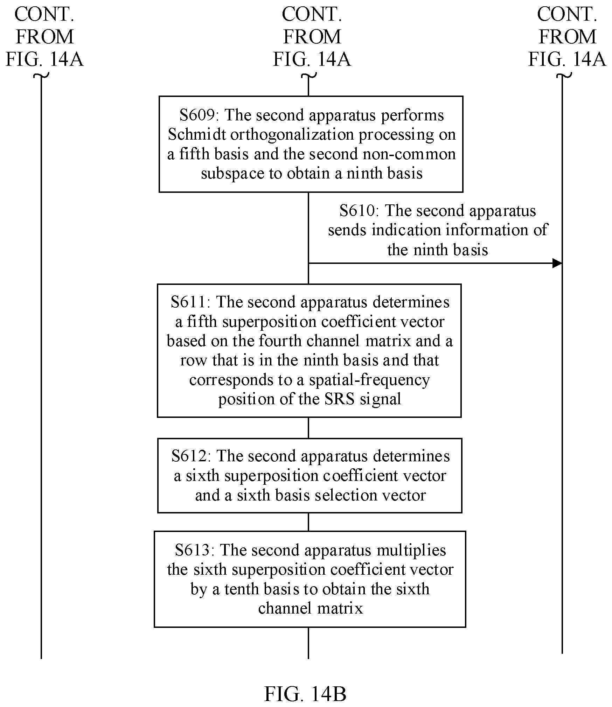

For example, FIG. 14A and FIG. 14B are a diagram of a channel reconstruction and channel basis update procedure enabled based on a channel map and an SRS according to this application. The procedure is implemented through interaction between a first apparatus, a second apparatus, and a core network device. The procedure includes the following steps.

S601: The second apparatus sends a first request message to the core network device, where the first request message requests to obtain the channel map, or requests to obtain basis information corresponding to the first apparatus in the channel map. Correspondingly, the core network device receives the first request message.

S602: The core network device sends a first response message to the second apparatus, where the first response message includes the channel map, or the basis information corresponding to the first apparatus in the channel map. Correspondingly, the second apparatus receives the first response message.

For specific implementations of S601 and S602, refer to corresponding descriptions in S101 and S102 and S201 and S202. Details are not described herein again.

S603: The second apparatus sends first indication information. Correspondingly, the first apparatus receives the first indication information.

S604: The first apparatus sends an SRS signal based on the first indication information. Correspondingly, the second apparatus receives the SRS signal.

S605: The second apparatus determines a fourth channel matrix based on the SRS signal.

S606: The second apparatus determines an eighth basis based on a plurality of sixth channel matrices.

S607: The second apparatus determines that a common subspace in which the eighth basis intersects with a first basis is a second common subspace.

S608: The first apparatus determines a second non-common subspace, where the second non-common subspace includes a subspace, in the eighth basis, other than the second common subspace.

S609: The second apparatus performs Schmidt orthogonalization processing on a fifth basis and the second non-common subspace to obtain a ninth basis.

S610: The second apparatus sends indication information of the ninth basis. Correspondingly, the core network device receives the indication information of the ninth basis.

S611: The second apparatus determines a fifth superposition coefficient vector based on the fourth channel matrix and a row that is in the ninth basis and that corresponds to a spatial-frequency position of the SRS signal.

S612: The second apparatus determines a sixth superposition coefficient vector and a sixth basis selection vector.

S613: The second apparatus multiplies the sixth superposition coefficient vector by a tenth basis to obtain the sixth channel matrix.

For specific implementations of S603 to S613, refer to corresponding descriptions in S509 to S519. Details are not described herein again.

In Example 5, the first basis is a region-level channel basis provided by the channel map, and the second apparatus delivers the first basis to the first apparatus as prior information, which helps reduce reference signal overheads. In addition, when a downlink reference signal is not considered, the first apparatus may send an uplink reference signal, so that the second apparatus can also implement channel reconstruction based on the uplink reference signal SRS. In addition, the first apparatus may update the channel basis based on historical SRS signal information and current SRS signal information, which helps further update the channel map and improve accuracy of the channel map.

It may be understood that to implement functions in the foregoing embodiments, the base station and the terminal include corresponding hardware structures and/or software modules for performing various functions. A person skilled in the art should be easily aware that, in this application, units and method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

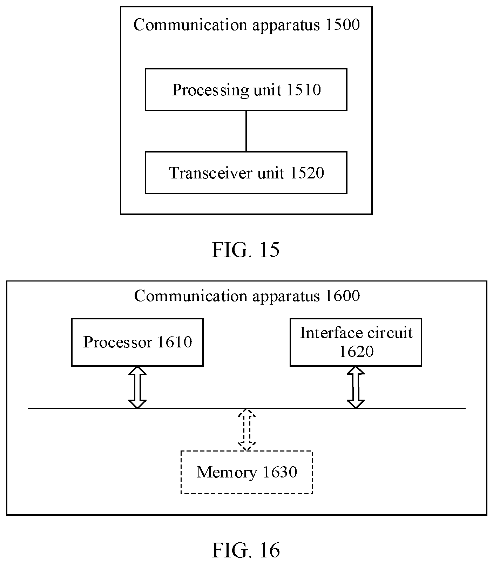

FIG. 15 and FIG. 16 are diagrams of structures of possible communication apparatuses according to embodiments of this application. The communication apparatuses may be configured to implement the functions of the terminal or the base station in the foregoing method embodiments, and therefore can also achieve beneficial effect of the foregoing method embodiments. In embodiments of this application, the communication apparatus may be the terminal 120 shown in FIG. 1, or may be the base station 110 shown in FIG. 1, or may be a module (for example, a chip) used in the terminal or the base station.

As shown inFIG. 15, a communication apparatus 1500 includes a processing unit 1510 and a transceiver unit 1520. The communication apparatus 1500 is configured to implement the functions of the terminal or the base station in the method embodiments shown in FIG. 9 to FIG. 14B. Optionally, the transceiver unit 1520 may also be referred to as a communication unit. Optionally, the transceiver unit includes a sending unit and a receiving unit. The sending unit is configured to send a signal, and the receiving unit is configured to receive a signal.

For example, when the communication apparatus 1500 is configured to implement the functions of the terminal in the method embodiment shown in FIG. 9, the transceiver unit 1520 is configured to receive indication information of a first basis, where the indication information of the first basis indicates a projection coefficient of the first basis on a quantization basis of the first basis and a column index of the quantization basis of the first basis. The processing unit 1510 is configured to determine and record the first basis. The transceiver unit 1520 is further configured to receive a first reference signal, and the processing unit 1510 is further configured to determine a first channel matrix based on the first reference signal. The processing unit 1510 is further configured to determine a first superposition coefficient vector based on the first channel matrix and a second basis constructed in a row that is in the first basis and that corresponds to a position index of the first reference signal in spatial-frequency domain. The processing unit 1510 is further configured to: select, from the first superposition coefficient vector, K superposition coefficient vectors with largest amplitudes to form a second superposition coefficient vector, and determine position indexes of the K superposition coefficient vectors in the first superposition coefficient vector to form a second basis selection vector. The transceiver unit 1520 is further configured to send the second superposition coefficient vector and the second basis selection vector.

For another example, when the communication apparatus 1500 is configured to implement the functions of the network device in the method embodiment shown in FIG. 9, the transceiver unit 1520 is configured to send indication information of a first basis, where the indication information of the first basis indicates a projection coefficient of the first basis on a quantization basis of the first basis and a column index of the quantization basis of the first basis. The transceiver unit 1520 is further configured to send a first reference signal, so that a receive end of the first reference signal can perform channel estimation based on the first reference signal to obtain a first channel matrix, and the receive end of the first reference signal can determine a first superposition coefficient vector based on the first channel matrix and a second basis constructed in a row that is in the first basis and that corresponds to a position index of the first reference signal in spatial-frequency domain, to determine to select, from the first superposition coefficient vector, K superposition coefficient vectors with largest amplitudes to form a second superposition coefficient vector, and to determine position indexes of the K superposition coefficient vectors in the first superposition coefficient vector to form a second basis selection vector. The transceiver unit 1520 is further configured to receive the second superposition coefficient vector and the second basis selection vector. The processing unit 1510 is configured to process data received by the transceiver unit 1520.

For more detailed descriptions of the processing unit 1510 and the transceiver unit 1520, refer to related descriptions in the method embodiment shown in FIG. 9.

Optionally, when the communication apparatus 1500 is configured to implement the functions of the terminal or the base station in the method embodiments in FIG. 10 to FIG. 14B, for more detailed descriptions of the processing unit 1510 and the transceiver unit 1520, refer to related descriptions in the method embodiments shown in FIG. 10 to FIG. 14B. Details are not described herein again.

As shown in FIG. 16, a communication apparatus 1600 includes a processor 1610 and an interface circuit 1620. The processor 1610 and the interface circuit 1620 are coupled to each other. It can be understood that the interface circuit 1620 may be a transceiver or an input/output interface. Optionally, the communication apparatus 1600 may further include a memory 1630, configured to: store instructions executed by the processor 1610, store input data required by the processor 1610 to run the instructions, or store data generated after the processor 1610 runs the instructions. Sometimes, the interface circuit 1620 may also be understood as a part of the processor 1610. In this case, the communication apparatus 1600 includes the processor 1610.

When the communication apparatus 1600 is configured to implement the method shown in FIG. 9, the processor 1610 is configured to implement the functions of the processing unit 1510, and the interface circuit 1620 is configured to implement the functions of the transceiver unit 1520. Optionally, when the communication apparatus 1600 is configured to implement the methods shown in FIG. 10 to FIG. 14B, for implementations of the processor 1610 and the interface circuit 1620, refer to corresponding descriptions in the method embodiments. Details are not described herein again.

When the communication apparatus is a chip used in a terminal, the chip in the terminal implements a function of the terminal in the foregoing method embodiments. That the chip in the terminal receives information from a base station may be understood as that the information is first received by another module (for example, a radio frequency module or an antenna) in the terminal, and then sent by these modules to the chip in the terminal. That the chip in the terminal sends information to a base station may be understood as that the information is first sent to another module (for example, a radio frequency module or an antenna) in the terminal, and then sent to the base station by these modules.

When the communication apparatus is a chip used in a base station, the chip in the base station implements a function of the base station in the method embodiments. That the chip in the base station receives information from a terminal may be understood as that the information is first received by another module (for example, a radio frequency module or an antenna) in the base station, and then sent by these modules to the chip in the base station. That the chip in the base station sends information to a terminal may be understood as that the information is first sent to another module (for example, a radio frequency module or an antenna) in the base station, and then sent to the terminal by the module.

In this application, that an entity A sends information to an entity B may be that A directly sends the information to B, or may be that A indirectly sends the information to B via another entity. Similarly, that the entity B receives the information from the entity A may be that the entity B directly receives the information sent by the entity A, or may be that the entity B indirectly receives the information sent by the entity A via another entity. The entity A and the entity B herein each may be a RAN node or a terminal, or may be a module in the RAN node or the terminal. Information sending and receiving may be information exchange between a RAN node and a terminal, for example, information exchange between a base station and a terminal. Information sending and receiving may alternatively be information exchange between two RAN nodes, for example, information exchange between a CU and a DU. Information sending and receiving may alternatively be information exchange between different modules in an apparatus, for example, information exchange between a chip in a terminal and another module in the terminal, or information exchange between a chip in a base station and another module in the base station.

It can be understood that the processor in embodiments of this application may be a central processing unit (Central Processing Unit, CPU), or may be another general-purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. Certainly, the processor and the storage medium may exist in a base station or terminal as discrete components.

All or a part of the foregoing embodiments may be implemented by software, hardware, firmware, or any combination thereof. When software is used to implement embodiments, all or a part of embodiments may be implemented in a form of a computer program product. The computer program product includes one or more computer programs or instructions. When the computer programs or instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise specified or if there is a logic conflict, terms and/or descriptions in different embodiments are consistent and may be mutually referenced, and technical features in different embodiments may be combined into a new embodiment based on an internal logical relationship thereof.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

In this application, "at least one" means one or more, and "a plurality of" means two or more. "And/Or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

## Claims

1. A communication method, wherein the method comprises:
receiving indication information of a first basis, wherein the indication information of the first basis indicates a projection coefficient of the first basis on a quantization basis of the first basis and a column index of the quantization basis of the first basis, the first basis is formed by L columns of basis vectors, and L is a positive integer;
receiving a first reference signal, and determining a first channel matrix based on the first reference signal;
determining a first superposition coefficient vector based on the first channel matrix and a second basis constructed in a row that is in the first basis and that corresponds to a position index of the first reference signal in spatial-frequency domain, wherein a dimension of the first channel matrix is MN₁*1, a dimension of the second basis is MN₁*L, M is a quantity of antenna ports for receiving the first reference signal, N₁ is a quantity of frequency domain units for carrying the first reference signal, the first superposition coefficient vector comprises L superposition coefficients, a dimension of the first superposition coefficient vector is L*1, M and N₁ are positive integers, and L is less than or equal to MN₁; and
sending a second superposition coefficient vector and a second basis selection vector, wherein the second superposition coefficient vector comprises K superposition coefficients, the K superposition coefficients are K elements with largest amplitudes in the first superposition coefficient vector, the second basis selection vector comprises position indexes of the K superposition coefficients in the first superposition coefficient vector, and K is a positive integer less than or equal to L.

2. A communication method, wherein the method comprises:
receiving indication information of a first basis, wherein the indication information of the first basis indicates a projection coefficient of a channel covariance matrix on a quantization basis and an index corresponding to the projection coefficient on the quantization basis;
determining the channel covariance matrix based on the projection coefficient of the channel covariance matrix and the index that are indicated; and performing singular value decomposition or eigen decomposition on the channel covariance matrix to obtain the first basis corresponding to the channel covariance matrix, wherein the first basis is formed by L columns of basis vectors, and L is a positive integer;
receiving a first reference signal, and determining a first channel matrix based on the first reference signal;
determining a first superposition coefficient vector based on the first channel matrix and a second basis constructed in a row that is in the first basis and that corresponds to a position index of the first reference signal in spatial-frequency domain, wherein a dimension of the first channel matrix is MN₁*1, a dimension of the second basis is MN₁*L, M is a quantity of antenna ports for receiving the first reference signal, N₁ is a quantity of frequency domain units for carrying the first reference signal, the first superposition coefficient vector comprises L superposition coefficients, a dimension of the first superposition coefficient vector is L*1, M and N₁ are positive integers, and L is less than or equal to MN₁; and
sending a second superposition coefficient vector and a second basis selection vector, wherein the second superposition coefficient vector comprises K superposition coefficients, the K superposition coefficients are K elements with largest amplitudes in the first superposition coefficient vector, the second basis selection vector comprises position indexes of the K superposition coefficients in the first superposition coefficient vector, and K is a positive integer less than or equal to L.

3. The method according to claim 1 or 2, wherein the method further comprises:
multiplying the second superposition coefficient vector by a third basis to obtain a second channel matrix, wherein the third basis is formed by columns that are in the first basis and that correspond to the K position indexes in the second basis selection vector.

4. The method according to claim 1 or 2, wherein the method further comprises:
determining a fourth basis based on a third channel matrix, wherein the third channel matrix is channel state information in a spatial-frequency domain dimension that is obtained by performing channel estimation based on a second reference signal, the second reference signal is a reference signal received before the first reference signal, and the second reference signal and the first reference signal are reference signals of a same type;
determining a first non-common subspace, wherein the first non-common subspace comprises a subspace, in the fourth basis, other than a first common subspace, and the first common subspace is a common subspace in which the fourth basis intersects with the first basis; and
sending indication information of the first non-common subspace, wherein the indication information of the first non-common subspace indicates a projection coefficient of the first non-common subspace on a quantization basis of the first non-common subspace and a column index of the quantization basis of the first non-common subspace, the first non-common subspace is formed by L₁ columns of basis vectors, and L₁ is a positive integer.

5. The method according to any one of claims 1 to 4, wherein the method further comprises:
receiving first indication information, wherein the first indication information indicates a frequency domain position for sending a third reference signal; and
sending the third reference signal based on the first indication information.

6. The method according to any one of claims 1 to 4, wherein the first basis, the second basis, the third basis, the fourth basis, or a fifth basis is a basis of a same type, and the basis of the same type is: a spatial-frequency joint basis, or a spatial domain basis and a frequency domain basis; and
the spatial-frequency joint basis is a matrix constructed by one or more spatial-frequency domain basis vectors, the spatial domain basis is a matrix constructed by one or more spatial domain basis vectors, and the frequency domain basis is a matrix constructed by one or more frequency domain basis vectors.

7. The method according to any one of claims 1 to 4, wherein the basis vector is any one of a discrete Fourier transform DFT basis vector, a fast Fourier transform FFT basis vector, an oversampled DFT basis vector, an oversampled FFT basis vector, or a vector determined based on a preset rule.

8. A communication method, wherein the method comprises:
sending indication information of a first basis, wherein the indication information of the first basis indicates a projection coefficient of the first basis on a quantization basis of the first basis and a column index of the quantization basis of the first basis, the first basis is formed by L columns of basis vectors, and L is a positive integer;
sending a first reference signal; and
receiving a second superposition coefficient vector and a second basis selection vector, wherein the second superposition coefficient vector comprises K superposition coefficients, the K superposition coefficients are K elements with largest amplitudes in a first superposition coefficient vector, the second basis selection vector comprises position indexes of the K superposition coefficients in the first superposition coefficient vector, the first superposition coefficient vector is obtained based on a first channel matrix and a second basis constructed in a row that is in the first basis and that corresponds to a position index of the first reference signal in spatial-frequency domain, the first channel matrix is determined based on the first reference signal, a dimension of the first channel matrix is MN₁*1, a dimension of the second basis is MN₁*L, M is a quantity of antenna ports for sending the first reference signal, N₁ is a quantity of frequency domain units for carrying the first reference signal, the first superposition coefficient vector comprises L superposition coefficients, a dimension of the first superposition coefficient vector is L*1, M and N₁ are positive integers, L is less than or equal to MN₁, and K is a positive integer less than or equal to L.

9. A communication method, wherein the method comprises:
sending indication information of a first basis, wherein the indication information of the first basis indicates a projection coefficient of a channel covariance matrix on a quantization basis and an index corresponding to the projection coefficient on the quantization basis, the projection coefficient of the channel covariance matrix and the index are used by a receive end to restore the channel covariance matrix and determine the first basis, the first basis is formed by L columns of basis vectors, and L is a positive integer;
sending a first reference signal; and
receiving a second superposition coefficient vector and a second basis selection vector, wherein the second superposition coefficient vector comprises K superposition coefficients, the K superposition coefficients are K elements with largest amplitudes in a first superposition coefficient vector, the second basis selection vector comprises position indexes of the K superposition coefficients in the first superposition coefficient vector, the first superposition coefficient vector is obtained based on a first channel matrix and a second basis constructed in a row that is in the first basis and that corresponds to a position index of the first reference signal in spatial-frequency domain, the first channel matrix is determined based on the first reference signal, a dimension of the first channel matrix is MN₁*1, a dimension of the second basis is MN₁*L, M is a quantity of antenna ports for sending the first reference signal, N₁ is a quantity of frequency domain units for carrying the first reference signal, the first superposition coefficient vector comprises L superposition coefficients, a dimension of the first superposition coefficient vector is L*1, M and N₁ are positive integers, L is less than or equal to MN₁, and K is a positive integer less than or equal to L.

10. The method according to claim 8 or 9, wherein the method further comprises:
multiplying the second superposition coefficient vector by a third basis to obtain a second channel matrix, wherein the third basis is formed by columns that are in the first basis and that correspond to the K position indexes in the second basis selection vector.

11. The method according to claim 8 or 9, wherein the method further comprises:
receiving indication information of a first non-common subspace, wherein the indication information of the first non-common subspace indicates a projection coefficient of the first non-common subspace on a quantization basis of the first non-common subspace and a column index of the quantization basis of the first non-common subspace, the first non-common subspace is formed by L₁ columns of basis vectors, and L₁ is a positive integer;
performing Schmidt orthogonalization processing on the first basis and the first non-common subspace to obtain a fifth basis; and
sending indication information of the fifth basis, wherein the indication information of the fifth basis indicates the fifth basis, or indicates a projection coefficient of the fifth basis on a quantization basis of the fifth basis and a column index of the quantization basis of the fifth basis, and the fifth basis is formed by (*L* + *L*₁) column vectors.

12. The method according to any one of claims 8 to 11, wherein the method further comprises:
sending first indication information, wherein the first indication information indicates a frequency domain position for sending a third reference signal; and
receiving the third reference signal.

13. The method according to any one of claims 8 to 11, wherein the first basis, the second basis, the third basis, a fourth basis, or the fifth basis is a basis of a same type, and the basis of the same type is: a spatial-frequency joint basis, or a spatial domain basis and a frequency domain basis; and the spatial-frequency joint basis is a matrix constructed by one or more spatial-frequency domain basis vectors, the spatial domain basis is a matrix constructed by one or more spatial domain basis vectors, and the frequency domain basis is a matrix constructed by one or more frequency domain basis vectors.

14. The method according to any one of claims 8 to 11, wherein the basis vector is any one of a discrete Fourier transform DFT basis vector, a fast Fourier transform FFT basis vector, an oversampled DFT basis vector, an oversampled FFT basis vector, or a vector determined based on a preset rule.

15. A communication apparatus, comprising a communication unit and a processing unit, wherein the communication unit and the processing unit are configured to perform the method according to any one of claims 1 to 7 or to perform the method according to any one of claims 8 to 14.

16. A communication apparatus, comprising a processor and an interface circuit, wherein the interface circuit is configured to: receive a signal from another communication apparatus and transmit the signal to the processor, or send a signal from the processor to another communication apparatus, and the processor is configured to implement the method according to any one of claims 1 to 7 or to implement the method according to any one of claims 8 to 14 by using a logic circuit or by executing code instructions.

17. A computer-readable storage medium, wherein the computer-readable storage medium stores a computer program or instructions, and when the computer program or the instructions are executed by a communication apparatus, the method according to any one of claims 1 to 7 or the method according to any one of claims 8 to 14 is implemented.

18. A chip system, wherein the chip system comprises a processor and an interface, and the processor is configured to execute a computer program, to enable the chip system to implement the method according to any one of claims 1 to 7 or to implement the method according to any one of claims 8 to 14.

19. A computer program product, comprising instructions, wherein when the instructions are run on a computer, the computer is enabled to perform the method according to any one of claims 1 to 7 or to perform the method according to any one of claims 8 to 14.

20. A communication system, wherein the communication system comprises an apparatus configured to perform the method according to any one of claims 1 to 7, and an apparatus configured to perform the method according to any one of claims 8 to 14.
